(19) Europäisches Patentamt
European Patent Office
Office européen des brevets

(11) **EP 3 578 287 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **19188649.8**

(22) Anmeldetag: **12.06.2017**

(51) Internationale Patentklassifikation (IPC):
**B23K 26/06** *(2014.01)* **H01S 3/10** *(2006.01)*
**H01S 3/13** *(2006.01)* **H01S 5/00** *(2006.01)*
**H01S 3/00** *(2006.01)*

(52) Gemeinsame Patentklassifikation (CPC):
**H01S 3/0057; H01S 3/0014; H01S 3/10053**

(54) **DISPERSIONSANPASSUNGSEINHEIT**

DISPERSION ADJUSTING UNIT

UNITÉ D'AJUSTEMENT DE DISPERSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2016 DE 102016110947**

(43) Veröffentlichungstag der Anmeldung:
**11.12.2019 Patentblatt 2019/50**

(62) Dokumentnummer(n) der früheren Anmeldung(en) nach Art. 76 EPÜ:
**17728870.1 / 3 471 912**

(73) Patentinhaber: **TRUMPF Laser GmbH**
**78713 Schramberg (DE)**

(72) Erfinder:
• **Budnicki, Aleksander**
**79194 Gundelfingen (DE)**
• **Scelle, Raphael**
**78050 Villingen-Schwenningen (DE)**

(74) Vertreter: **Trumpf Patentabteilung**
**TRUMPF SE & Co. KG**
**IP + Licenses (TH550)**
**Johann-Maus-Straße 2**
**71254 Ditzingen (DE)**

(56) Entgegenhaltungen:
EP-A1- 2 933 882     WO-A1-2010/028837
WO-A1-2015/140512     CN-A- 104 795 718
DE-A1- 102010 018 967     DE-A1- 19 531 059
US-B1- 7 822 347

**Beschreibung**

Die vorliegende Erfindung betrifft eine Dispersionsanpassungseinheit für elektromagnetische Strahlung mit einer spektralen Breite. Ferner betrifft die vorliegende Erfindung ein Verfahren zur Dispersionsanpassung für Laserpulse .

Laserpulse weisen eine spektrale Breite auf, die die erreichbare minimale Dauer der Laserpulse bestimmt. Je breiter das zugrundeliegende Frequenzspektrum ist, desto geringer kann die Pulsdauer des Laserpulses werden. Allerdings führt allgemein die Dispersion des durchlaufenen Materials (hierin als Materialdispersion bezeichnet) und gegebenenfalls eine Selbstphasenmodulation bei großen Spitzenleistungen zu einem Auseinanderlaufen der spektralen Komponenten, so dass insbesondere für kurze und ultrakurze Laserpulse mit Pulsdauern im ps-Bereich und kürzer üblicherweise eine Dispersionsanpassung des optischen Weges vorgenommen wird, wenn man das Auseinanderlaufen der Laserpulse verhindern oder rückgängig machen möchte. Optische Aufbauten, die einer dispersiven Verbreiterung der Pulsdauer entgegenwirken, werden hierin als Pulskompressoreinheiten bezeichnet. Beispiele derartiger Dispersionsanpassungseinheiten umfassen z.B. Gitterpaar- oder Prismenpaar-basierte Kompressoreinheiten (kurz: Gitter- oder Prismenkompressoren), die ein hierin als Winkeldispersion bezeichnetes Auffächern der spektralen Komponenten des Laserpulses zur Erzeugung von unterschiedlichen optischen Weglängen nutzen.

Ferner können insbesondere verstärkte Pulse zu hohen Intensitäten führen, die unter anderem nichtlineare Effekte wie Selbstfokussierung z.B. im Verstärkerlasermedium hervorrufen können. Derartige nichtlineare optische Effekte können sich nachteilig auf die Strahl- und Pulsqualität und entsprechend auf den gesamten Verstärkungsvorgang auswirken. Entsprechend werden Verstärkerkonfigurationen derart ausgelegt, dass entweder ein aktiv gestreckter Laserpuls verstärkt wird oder die Pulsverlängerung während des Verstärkungsvorgangs eintritt. Optische Aufbauten derartiger Dispersionsanpassungseinheiten, die eine dispersive Verbreiterung der Pulsdauer eines Laserpulses bewirken, werden hierin als Pulsstreckereinheiten bezeichnet. Beispiele derartiger Dispersionsanpassungseinheiten umfassen z.B. Gitterpaar- oder Prismenpaar-basierte Streckereinheiten (kurz: Gitter- oder Prismenstrecker), die eine z.B. zu einer später eingesetzten Pulskompressoreinheit entgegengesetzte Winkeldispersion nutzen, beispielsweise mit einem integrierten Linsensystem. Ferner kann ein Laserpuls beispielsweise durch Material mit entsprechenden dispersiven Eigenschaften zur Pulsverbreiterung geführt werden, beispielsweise durch optische Fasern evtl. mit integrierten (gechirpten) Faser-Bragg-Gittern.

Grundlegender Parameter bei Gitter- oder Prismenkompressoren und Gitter- oder Prismenstreckern ist das Ausmaß der spektralen Auffächerung. Dies hängt z.B. von der Gitterkonstante des verwendeten Gitters oder dem Brechungsindex des verwendeten Prisma ab. Allgemein ist die Dispersion durch den Abstand der Gitter bzw. Prismen einstellbar, der die aufgrund der Winkeldispersion erzeugten Weglängenunterschiede bestimmt. Bei Gitterkompressoren oder -streckern trägt insbesondere die durch die Beugung akkumulierte Phase zur Dispersion bei. Allgemein gilt, je besser die Dispersion kompensiert werden kann, desto näher kann die Pulsdauer an die spektral erreichbare Pulsdauer herankommen. Je kürzer die Pulsdauern, desto mehr Ordnungen der Dispersion sind bei der Komprimierung zu berücksichtigen. Zur Feineinstellung können ferner dünne, im Strahlengang positionierte Glasplatten verwendet werden, die durch Materialdispersion die Dispersionseigenschaften des Strahlengangs einstellbar machen.

Allgemein werden obige Konzepte zur Pulsstreckung und Pulskomprimierung bei der sogenannten CPA (chirped pulse amplification) eingesetzt, um ultrakurze Pulse mit hohen Pulsenergien zu erzeugen. So wird beispielsweise zur Erzeugung (ultra-) kurzer Pulse mit einem Faserlasersystem typischerweise ein Eingangslaserpuls eines Faserlasers zeitlich gestreckt (z.B. in einem Faser-basierten Strecker oder in einem Gitterstrecker), in einer Faserverstärkereinheit verstärkt und anschließend zeitlich komprimiert (z.B. in einem Gitterkompressor). Ähnliche Aufbauten zur Erzeugung (ultra-) kurzer Pulse können z.B. bei Werkzeugmaschinen auf Scheibenlasersystemen basieren. Typischerweise ist eine sehr exakte und technisch anspruchsvolle Komprimierung erforderlich, um das dispersive Auseinanderlaufen der spektralen Komponenten rückgängig zu machen.

Im Stand der Technik sind verschiedenste Ansätze zur genauen Dispersionskontrolle z.B. in Gitterkompressoren bekannt. Beispielsweise offenbaren WO 2015/117128 A1 und US 7,822,347 B1 Konzepte, bei denen die Änderung der Pulsdauer über den Gitterabstand des Streckers oder Kompressors geregelt und zusätzlich mithilfe eines "chirped" FBGs (Fiber Bragg Grating) feinjustiert wird. Weitere Ansätze sind aus US 7,729,045 B2 sowie aus US 8,780,440 B2 bekannt. Ferner offenbart DE 10 2010 018967 A1 ein OPO-System mit Dispersionskompensation basierend auf Materialdispersion, bei der eine (oder zwei) Glasplatten im Strahlengang positioniert sind. Ferner offenbaren US 2008/0304127 A1 einen Pulsformer mit einem SLM, US 6,272,156 B1 die Verwendung einer Strecker-Kompressor-Anordnung bei einer Lichtleitfaser-basierten Überführung eines gepulsten Laserstrahls, US 2011/0255563 A1 einen Pulsformer für ein Lasersystem und US 2006/0159137 A1 ein gepulstes Lasersystem mit einem Gitterkompressor.

Ferner offenbart WO 2010/028837 A1 eine Vorrichtung zur Verstärkung von Lichtpulsen mit einem Strecker, mindestens einem Verstärker und einem Kompressor, wobei der Strecker und der Kompressor sich im Wesentlichen kompensierende Dispersionen erzeugen und beispielsweise mit Prismen oder Beugungsgittern aufgebaut werden. Die Dispersion wird ferner mit einem zusätzlichen optischen Element variabler Dispersion und/oder durch Selbstphasenmodulation der Lichtpulse eingestellt. Das zusätzliche optische Element wird vor dem Strecker oder zwischen dem Strecker und dem Verstärker angeordnet. Beispielsweise wird ein weiteres Prismenpaar eingesetzt.

WO 2015/140512 A1 offenbart einen Hochleistungslaser mit gechirpter Pulsverstärkung zur Erzeugung extrem leistungsstarker ultrakurzer Pulse. Der Hochleistungslaser umfasst in einer Ausführungsform einen Transmissionsgitter-Strecker mit einem erstes Beugungsgitter zum Dispergieren eines Seed-Laserpulses, eine Übertragungsoptik, die den dispergierten Laserpuls sammelt und ihn zu einem Transmissionsbeugungsgitter leitet. Das Transmissionsbeugungsgitter kollimiert den Laserpuls auf einen Reflektor, der den Laserpuls durch den Impulsstrecker zurückreflektiert.

CN 104795718 A offenbart einen gechirpter Pulsverstärkungslaser mit Dispersionskompensation der vierten Ordnung. Neben einen Gitterstrecker und einem Gitterkompressor umfasst die Dispersionskompensation einen weiteren Dispersionskorrektor umfassend ein erstes Gitter, ein zweites Gitter, ein rechtwinkliges Prisma und einen Spiegel. Der weitere Dispersionskorrektor dient der Korrektur der vierten Ordnung der Dispersion und verwenden eine Gitterstruktur auf einem Prisma, sodass der dispersive Beitrag des Dispersionskorrektors bestimmt wird durch das Gitter und das Prisma, mit entsprechend Effekt bezüglich der vierten Ordnung der Dispersion.

Einem Aspekt dieser Offenbarung liegt die Aufgabe zugrunde, eine erweiterte Dispersionsanpassung bei z.B. Gitterpaar- und Prismenpaar-basierten Dispersionsanpassungseinheiten bereitzustellen. Einem weiteren Aspekt der Erfindung liegt die Aufgabe zugrunde, eine Dispersionseinstellung bei derartigen Dispersionsanpassungseinheiten zu ermöglichen, die eine möglichst geringe Auswirkung auf die Strahlqualität und den Strahlverlauf nach der Dispersionsanpassungseinheit aufweist und insbesondere auf einer einfach zu kontrollierenden Einstellung einer optischen Komponente basiert.

Zumindest eine dieser Aufgaben wird gelöst durch eine Dispersionsanpassungseinheit nach Anspruch 1, durch eine Dispersionsanpassungseinheit nach Anspruch 3, durch ein Lasersystem nach Anspruch 12 und durch ein Verfahren zur Dispersionsanpassung nach Anspruch 15. Weiterbildungen sind in den Unteransprüchen angegeben.

In einem Aspekt umfasst eine Dispersionsanpassungseinheit für elektromagnetische Strahlung mit einer spektralen Breite, insbesondere für Laserpulse, eine Anordnung mit mindestens einem dispersiven Element zur Erzeugung von Winkeldispersion in einem durch zwei Wechselwirkungsbereiche der elektromagnetischen Strahlung mit dem mindestens einen dispersiven Element begrenzten Winkeldispersionsbereich, in dem einzelnen Spektralkomponenten der elektromagnetischen Strahlung unter einem Winkel zueinander verlaufende optische Wege zugeordnet sind. Ferner weist die Dispersionsanpassungseinheit eine im Winkeldispersionsbereich angeordneten optischen Einheit mit einem die elektromagnetische Strahlung transmittierenden optischen Element auf, das einen eintrittswinkelabhängigen Parallelversatz der einzelnen Spektralkomponenten der elektromagnetischen Strahlung bezüglich der Ausbreitung der einzelnen Spektralkomponenten vor und nach der optischen Einheit bewirkt.

In einem weiteren Aspekt weist eine Dispersionsanpassungseinheit für elektromagnetische Strahlung mit einer spektralen Breite, insbesondere für Laserpulse, mindestens ein Paar von dispersiven Elementen zur Erzeugung von Winkeldispersion auf. Das Paar von dispersiven Elementen ist derart angeordnet, dass zwischen den dispersiven Elementen des Paars von dispersiven Elementen einzelnen Spektralkomponenten unter einem Winkel zueinander verlaufende optische Wege zugeordnet sind. Ferner weist die Dispersionsanpassungseinheit ein optisches Element auf, das im Strahlengang zwischen den dispersiven Elementen angeordnet und zum Einstellen der Winkelstellung des optischen Elements bezüglich des Strahlengangs drehbar gelagerten ist.

In einem weiteren Aspekt weist ein Lasersystem eine Laserpulsquelle zum Erzeugen von spektral breiten Laserpulsen und eine Pulsstreckung oder eine Pulskompression oder beides mit mindestens einer zuvor beschriebene Dispersionsanpassungseinheit auf.

Ferner kann das Lasersystem eine Steuerungseinheit und eine Pulsdauermessvorrichtung zum Ausgeben eines Pulsdauer-abhängigen Messsignals an die Steuereinheit aufweisen, wobei die Steuerungseinheit z.B. zum Einstellen der Winkelstellung des optischen Elements bezüglich des Strahlengangs in Abhängigkeit des Pulsdauer-abhängigen Messsignals ausgebildet ist.

In einem weiteren Aspekt umfasst ein Verfahren zur Dispersionsanpassung für Laserpulse die Schritte: Bereitstellen eines Winkeldispersionsanteils durch spektrales Auffächern und Zusammenführen eines gepulsten Laserstrahls in einem Winkeldispersionsbereich; Bereitstellen eines optischen Elements in dem Winkeldispersionsbereich, das jeweils von einem Eintrittswinkel von spektralen Komponenten bezüglich einer Eintrittsoberfläche des optischen Elements abhängige Ausbreitungsrichtungen im optischen Element bereitstellt; und Verändern der Ausbreitungsrichtung und/oder der Ausbreitungslänge im optischen Element, wodurch Einfluss auf den Winkeldispersionsanteil, insbesondere unter Beibehalten der Ausbreitungsrichtungen spektraler Komponenten, genommen wird, wobei das Verändern der Ausbreitungsrichtung und/oder der Ausbreitungslänge einen eintrittswinkelabhängigen Parallelversatz der einzelnen Spektralkomponenten der elektromagnetischen Strahlung bezüglich der Ausbreitung der einzelnen Spektralkomponenten bewirkt, Z.B. ergeben sich durch ein Einbringen einer drehbaren Glasplatte (als Beispiel eines elektromagnetische Strahlung transmittierenden optischen Elements) in den spektral aufgefächerten Bereich einer Anordnung von mindestens einem dispersiven Element zusätzliche Parameter der Dispersionseinstellung der zugehörigen Dispersionsanpassungseinheit. Der spektral abhängige Auftreffwinkel auf die Glasplatte führt für die verschiedenen spektralen Komponenten zu unterschiedlich langen Wegstrecken in der Glasplatte und zu einem unterschiedlichen Strahlengang nach der Glasplatte. Es ergibt sich ein eintrittswinkelabhängiger Parallelversatz der einzelnen Spektralkomponenten. Dabei ist die spektrale Abhängigkeit des Brechungsindex und damit der Änderung der Materialdispersion im Vergleich zur Dispersionsänderung durch den geänderten Parallelversatz weitgehend vernachlässigbar.

Mit der drehbaren Glasplatte lässt sich somit die zeitliche Komprimierung eines Laserpulses in einem (z.B. Gitter-/Prismen-/Grism-) Kompressor modifizieren.

Zum Einstellen der Dispersion ist die Glasplatte beispielsweise über einer Steuerungseinheit drehbar gelagert. Eine derartige Anordnung kann mit geringem bzw. ohne Einfluss auf die Strahlqualität umgesetzt werden. Allgemein lässt sich durch die Dicke der Glasplatte (allgemein des optischen Elements zur Dispersionsanpassung) der Verstellbereich bzw. die Sensitivität der Dispersionsmodifikation durch die Drehung wählen.

Ähnliche Auswirkungen auf den Strahlengang einzelner Spektralkomponenten bei der Dispersionsanpassung kann ferner mithilfe eines als Doppel-Keil-Struktur ausgebildeten optischen Elements und/oder eines elektrooptischen Modulators und/oder zweier akustooptischer Modulatoren bewirkt werden.

Voraussetzung für die längenwellen-/einfallswinkelabhängige Modifikation der Winkeldispersion ist allgemein, dass eine Brechungsindexänderung in einer optischen Einheit bereitgestellt wird. Bei einer Implementierung in Luft/Stickstoff muss der Brechungsindex des optischen Elements entsprechend ungleich 1 sein, um eine Brechung bereitzustellen, die vom Einfallswinkel abhängt.

Im Falle eines beispielsweise gefalteten Gitterkompressors mit 2-fachem Durchgang hat eine planparallele Platte den Vorteil, den Einfluss auf die Strahlqualität zu minimieren. Jedoch kann in einem entfalteten Gitterkompressor auch nur einseitig eine optische Einheit mit einem optischen Element vorgesehen werden, wenn beispielsweise die Streckung oder Komprimierung gering ist und entsprechend die Auswirkungen auf die Strahlqualität im asymmetrischen Strahlengang gering bleiben.

Das optische Element weist bevorzugt eine Geometrie auf, die insbesondere die Richtung eines eintreffenden (monochromen) Strahls - bei Annahme eines nicht-senkrechten Einfalls - parallelversetzt. Dadurch bleiben die Ausbreitungsrichtungen der einzelnen Spektralkomponenten im spektral divergenten Bereich vor und nach dem optischen Element gleich, so dass das Winkelverhältnis zwischen den Strahlengängen der einzelnen Spektralkomponenten erhalten bleibt, der Grad der Auffächerung aber variiert werden kann.

Das optische Element ist im verwendeten spektralen Bereich transparent und weist allgemein z.B. plan-parallele Ein- und Ausgangsflächen auf. Es ist z.B. eine plan-parallele Quarzplatte oder ein System von optischen Elementen, das plan-parallele Ein- und Ausgangsflächen bereitstellt. Die Ein- und Ausgangsflächen können beispielsweise antireflexbeschichtet sein, um Leistungsverluste und Interferenzen zu vermeiden.

Ferner kann die optische Einheit zwei z.B. gegeneinander verdrehbare Glasplatten (als optische Elemente) aufweisen, wodurch bei entsprechender Ausrichtung der Glasplatten eine strahlversatzfreie Nullstellung umgesetzt werden kann, in der im Wesentlichen nur die Materialdispersion der Glasplatten zu den Dispersionseigenschaften der Dispersionsanpassungseinheiten beiträgt. Ferner kann die optische Einheit eine dünne Platte für eine Feineinstellung und eine dicke Platte für eine Grobjustage der Dispersionseigenschaften umfassen.

Die hierin offenbarten Konzepte und Ausführungsformen können die folgenden Vorteile aufweisen. Die Pulsdauer kann unabhängig von oder ergänzend zu einer Bewegung eines der dispersiven Elemente (z.B. Verschiebung des zweiten Gitters in einem Gitterkompressor zur Abstandanpassung) eingestellt werden. Z.B ist im Falle eines Gitterkompressors die Strahlqualität sehr sensitiv auf die Ausrichtung der Gitterstrukturen. Dadurch erfordert das Einstellen der Pulsdauer einen sehr komplexen Gitterhalter, der sich sehr exakt verschieben lassen sollte, ohne dabei die Orientierung der Gitterstruktur zu beeinflussen. Ferner lässt sich die Sensitivität der Dispersionsanpassung, und damit die Feineinstellung der Pulsdauer der Laserpulse, auf die Drehung der Platte durch die Materialdicke des optischen Elements, z.B. einer plan-parallelen Platte von wenigen Millimetern oder Zentimetern, auswählen. Die Materialdicke kann z.B. so gewählt werden, dass ein Kompressoraufbau möglichst stabil ist und/oder die Pulsdauer über das Drehen des optischen Elements mittels eines Motors oder Piezoelements aktiv nachgeregelt bzw. variiert werden kann. Allgemein wird die Materialdicke entsprechend des gewünschten Verstellbereichs gewählt, wobei sich bei einem dicken optischen Element kleine Winkeländerungen stärker auswirken als bei einem dünnen optischen Element. Ferner kann beispielsweise eine Doppel-Keil-Konfiguration eine Ausgangsdicke des optischen Elements einstellbar machen. Bei einer Doppel-Keil-Konfiguration kann ferner mindestens einer der Keile unabhängig von dem dispersiven Element, beispielsweise dem Gitter/Prisma/Grism (oder den Gittern/Prismen/Grismen) eines Kompressors bzw. Streckers bewegt werden.

Allgemein erlauben die hierin vorgeschlagenen Konzepte es, den benötigten Bauraum für eine Dispersionsanpassungseinheit zu reduzieren. Ferner kann die Einstellung der Dispersion auch ohne eine Translationsbewegung eines dispersiven Elements (z.B. Gitter, Prisma oder Grism) vorgenommen werden, so dass insbesondere ein wenn überhaupt nur geringer Einfluss auf den Strahlverlauf bei der Einstellung der Dispersion ausgeübt wird.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:

Fig. 1 eine schematische Darstellung eines Lasersystems mit einer auf einer drehbaren Glasplatte basierenden Dispersionsanpassungseinheit zur Pulsdauerkomprimierung (Kompressor),

Fig. 2A-2B beispielhafte Berechnungen von drehwinkelabhängigen Dispersionsbeiträgen,

Fig. 3A-3D beispielhafte Berechnungen von drehwinkelabhängigen Dispersionsordnungen bei einer kleinen Gitterkonstante,

Fig. 4A-4B beispielhafte Berechnungen von Intensitätsverläufen zur Verdeutlichung der Dispersionsanpassung,

Fig. 5A-5D beispielhafte Berechnungen von drehwinkelabhängigen Dispersionsordnungen bei einer großen Gitterkonstante,

Fig. 6 beispielhafte Berechnungen von Intensitätsverläufen zur Verdeutlichung der Pulsformung,

Fig. 7 eine schematische Darstellung einer auf einer drehbaren Glasplatte basierenden Dispersionsanpassungseinheit zur Pulsdauerstreckung (Strecker),

Fig. 8A-8C beispielhafte Ausgestaltungen von optischen Einheiten mit mehreren drehbaren optischen Elementen für Dispersionsanpassungseinheiten,

Fig. 9 ein beispielhaftes Flussdiagramm eines Verfahrens zur Dispersionsanpassung,

Fig.10 eine schematische Darstellung einer weiteren auf einer Doppel-Keil-Struktur basierenden optischen Einheit für eine Dispersionsanpassungseinheit,

Fig.11 eine schematische Darstellung eines Lasersystems mit einer auf einem elektrooptischen Modulator basierenden Dispersionsanpassungseinheit zur Pulsdauerkomprimierung und

Fig.12 eine schematische Darstellung eines Lasersystems mit einer auf einem einzigen dispersiven Element basierenden Dispersionsanpassungseinheit zur Pulsdauerkomprimierung.

Hierin beschriebene Aspekte basieren zum Teil auf der Erkenntnis, dass durch den Eingriff in den winkeldispersiv-aufgefächerten Propagationsabschnitts eines z.B. Gitter-, Prismen oder Grismkompressors (oder Streckers) zusätzliche Möglichkeiten zur Beeinflussung der Dispersionseigenschaften bestehen. Dabei wurde ferner erkannt, dass die Winkeldispersion durch einen eintrittswinkelabhängigen Parallelversatz der einzelnen Spektralkomponenten modifiziert werden kann.

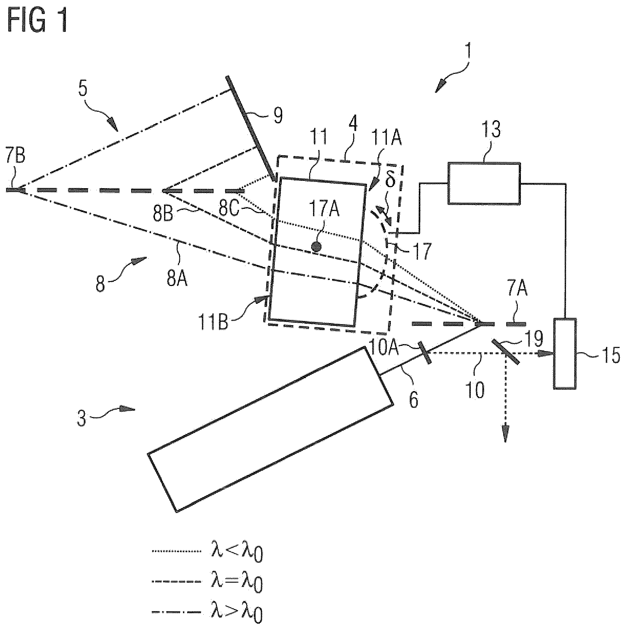

Im Folgenden wird unter Bezug auf Fig. 1 das hierin offenbarte Konzept zur Dispersionsanpassung für ein Ultrakurzpulssystem - beispielhaft für Lasersysteme die üblicherweise eine Dispersionsanpassung vornehmen - anhand einer auf einer drehbaren Glasplatte basierenden Dispersionsanpassungseinheit zur Pulsdauerkomprimierung beschrieben.

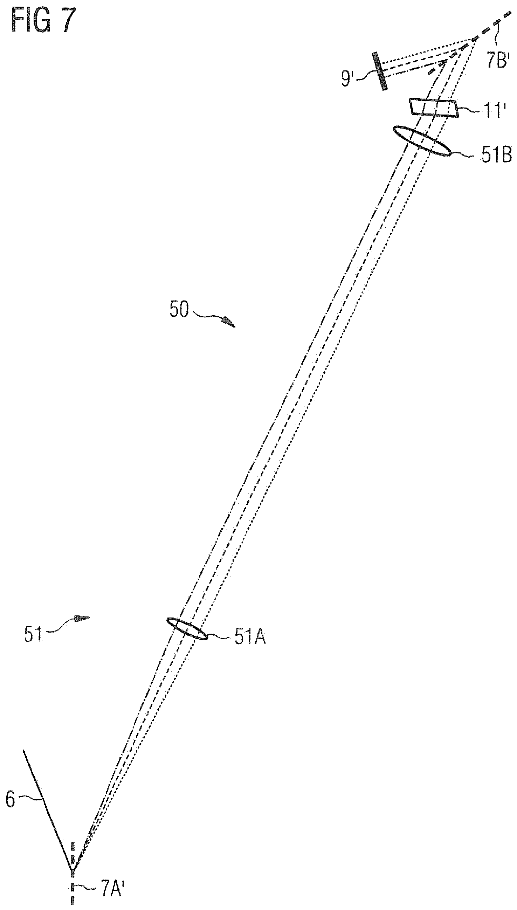

In Fig. 1 umfasst ein Ultrakurzpulssystem 1 eine Laserpulsquelle 3 zum Erzeugen von spektral breiten Laserpulsen und eine nachfolgend erläuterte optische Einheit 4 umfassende Dispersionsanpassungseinheit 5 zur Pulsdauerkomprimierung. Die Laserpulsquelle 3 kann beispielsweise als Laseroszillator oder Laseroszillator-Verstärker-Kombination ausgebildet sein. Ferner kann z.B. eine ähnliche Dispersionsanpassungseinheit (siehe z.B. Fig. 7) im Rahmen einer Pulsstreckung in der Laserpulsquelle 3 integriert sein.

Im Ultrakurzpulssystem 1 werden Laserpulse mit spektralen Breiten von z.B. 1 nm und größer und Pulsenergien von z.B. 0,1 μJ und größer der Dispersionsanpassungseinheit 5 als Eingangsstrahl 6 zugeführt. Die spektrale Breite der Laserpulse bedingt die Notwendigkeit einer Dispersionsanpassung des Strahlengangs, um an einem Zielort eine bestimmte Pulsform (Intensitätsverlauf) der Laserpulse mit einer gewünschten, beispielsweise der kürzest möglichen oder einer an ein Bearbeitungsverfahren angepassten, Pulsdauer bereitzustellen.

Die Dispersionsanpassungseinheit 5 ist beispielhaft in Form eines gefalteten Gitterkompressors aufgebaut. Der Gitterkompressor umfasst ein Paar von dispersiven Elementen in Form eines ersten Gitters 7A und eines zweiten Gitters 7B, die zwei Wechselwirkungsbereiche der Gitter mit der Laserstrahlung bereitstellen. Die spektral abhängigen Beugungsbedingungen erzeugen eine Winkeldispersion nach dem ersten Gitter 7A. D.h., in einem Winkeldispersionsbereich 8 zwischen den dispersiven Elementen (Gitter 7A und 7B) verlaufen die optischen Wege für die einzelnen Spektralkomponenten in einer Auffächerungsebene unter einem Winkel zueinander.

In Fig. 1 sind beispielhaft drei optische Wege 8A, 8B, 8C des Strahlengangs jeweils für eine Zentralwellenlänge $\lambda_0$ sowie eine längere ($\lambda > \lambda_0$) und kürzere ($\lambda < \lambda_0$) Wellenlänge eingezeichnet. Die optischen Wege 8A, 8B, 8C der verschiedenen Wellenlängen verlaufen in einem Auffächerungsbereich 8 unter einem Winkel zueinander. Das zweite Gitter 7B bewirkt eine Ausrichtung/-Parallelisierung der optischen Wege 8A, 8B, 8C auf ein eine Faltung bewirkendes Reflektorelement 9. Das Reflektorelement 9 ist beispielsweise ein Umlenkprisma oder ein Dachspiegel, so dass der Rückweg die gleichen optischen Bedingungen erfährt, aber z.B. in der Höhe versetzt ist, um eine Trennung der komprimierten Laserpulse eines Ausgangsstrahls 10 vom Eingangsstrahl 6 an einem Abgriffspiegel 10A zu ermöglichen. In Fig. 1 sind die dispersiven Elemente 7A, 7B beispielhaft als Transmissionsgitter ausgebildet. Alternativ können beispielsweise Reflexionsgitter, Prismen oder Grism eingesetzt werden.

Gemäß den hierin offenbarten Konzepten umfasst die Dispersionsanpassungseinheit 5 die optische Einheit 4, welche einen weiteren Parameter zur Einstellung der Dispersion bereitstellt. In der in Fig. 1 gezeigten Ausführungsform umfasst die optische Einheit 4 als optisches Element z.B. eine transmittierende plan-parallele Platte 11. Das optische Element, d.h. die Platte 11, ist z.B. aus Quarz, YAG, Saphir oder SF 10. Es ist zwischen dem ersten Gitter 7A und dem zweiten Gitter 7B im Auffächerungsbereich 8 angeordnet. In Fig. 1 ist die Platte 11 übergroß dimensioniert dargestellt, um die optischen Wege in ihrem Verlauf klarer darstellen zu können. Aufgrund der spektralen Auffächerung fallen die einzelnen Wellenlänge mit unterschiedlichen Winkeln auf eine Eintrittsoberfläche 11A der Platte 11, durchlaufen die Platte 11 auf unterschiedlichen langen optischen Wegen und treten an der Austrittsoberfläche 11B mit geänderten Abständen zueinander aus, wobei bei einer plan-parallelen Platte der Winkelbezug zwischen den Wellenlängen erhalten bleibt. Entsprechend bewirkt die Platte 11 einen eintrittswinkelabhängigen Parallelversatz der einzelnen Spektralkomponenten der Laserstrahlung bezüglich der Ausbreitung der einzelnen Spektralkomponenten vor und nach der die Platte 11. In Fig. 1 erfolgt die Ausrichtung der optischen Wege 8A, 8B, 8C entsprechend mit parallel zueinander angeordneten Gittern 7A, 7B.

Die optische Einheit 4 kann ferner eine Winkeleinstellvorrichtung 17 zur Einstellung der Winkelstellung der Platte 11 bzgl. einer Drehachse 17A umfassen. Zur Ansteuerung der Winkeleinstellvorrichtung 17 kann das Lasersystem 1 ferner eine Steuerungseinheit 13 und eine Pulsdauermessvorrichtung 15 aufweisen.

Man erkennt, dass eine Drehung der Platte 11 die optischen Wege in der Platte 11 und die Abstände zwischen den Wellenlängen auf der Austrittsoberfläche 11B ändert. Entsprechend beeinflusst die Drehung die Dispersionseigenschaften der Dispersionsanpassungseinheit 5, so dass die Pulsdauer der Laserpulse im Ausgangsstrahl 10 durch die Drehung der Platte 11 eingestellt werden kann.

Im Gegensatz zu dem hierin beschriebenen Konzept basiert die Anordnung, die in der eingangs erwähnten DE 10 2010 018967 A1 offenbart ist, auf einer Glasplatte, die nicht zwischen den Gittern angeordnet ist. Somit weist der dortige Aufbau nur einen im Vergleich deutlich geringeren Materialdispersionsbeitrag und nicht den die Pulsdauer zusätzlich verändernden geometrischen Effekt eines zwischen den Gittern angeordneten optischen Elements auf, wie es der Fall bei der hierin offenbarten Anordnung ist.

Unter Verwendung der in Zusammenhang mit Fig. 1 beschriebenen Dispersionsanpassungseinheit 5 konnte mit einer plan-parallelen, ca. 1,5 mm dicken Glasplatte die Pulsdauer zwischen 200 fs und 1 ps variiert werden, ohne dass dabei die Strahl- bzw. Pulsqualität wesentlich beeinträchtigt wurde. Dabei war die Justage reproduzierbarer und komfortabler als die konventionelle Justage durch Verstellen des Abstands zwischen den Kompressorgittern 7A, 7B. Offensichtlich ist die Variation der Pulsdauer nicht auf den Bereich 200 fs bis 1 ps begrenzt, sondern kann u.a. durch die Dicke und das Material der Glasplatte (bei gegebenem Verstellbereich des Drehwinkels $\delta$) gewählt werden.

Im Folgenden wird das Funktionsprinzip allgemein, jedoch beispielhaft mit Bezug auf die in Fig. 1 gezeigte Ausführungsform zusammengefasst. Der Fachmann kann das Funktionsprinzip auf die nachfolgend beschriebenen alternativen Ausführungsformen im Rahmen dieser Offenbarung analog übertragen. Durch die Beugung am ersten Gitter 7A treffen die verschiedenen spektralen Komponenten mit unterschiedlichen Winkeln auf die Platte 11. Dadurch ändert sich der Phasenunterschied zwischen den spektralen Komponenten bei Drehung der Platte 11 durch mehrere Effekte:

1. Die Wegstrecke in der optischen Einheit (z.B. in der Platte 11) unterscheidet sich für die verschiedenen spektralen Komponenten. Dies führt zu unterschiedlichen optischen Weglängen (die Abhängigkeit des Brechungsindexes von der Wellenlänge ist in den meisten Konfigurationen vernachlässigbar) und damit zu einem Phasenunterschied. Der Phasenunterschied hängt im Fall der Platte 11 z.B. von deren Orientierung im Strahlengang, d.h. allgemein dem Einfallswinkel z.B. einer zentralen Wellenlänge auf die Platte 11, ab.

2. Durch die unterschiedlichen Auftreffwinkel erfahren die spektralen Komponenten einen unterschiedlich großen Strahlversatz beim Austreten aus der Platte 11. Dadurch kann sich bei Rotation der Platte 11 ändern:

   a) die Wegstrecke zwischen der Platte 11 und dem 2. Wechselwirkungsbereich (Auftreffbereich am Gitter 7B) für die verschiedenen spektralen Komponenten,
   b) die Größe (d.h. die Auffächerung) des Strahls am 2. Wechselwirkungsbereich (Auftreffbereich am Gitter 7B) und damit der Phasenbeitrag des 2. dispersiven Elements (Gitter 7B) und
   c) die Wegstrecke zwischen dem 2. dispersiven Element (Gitter 7B) und dem Reflektorelement 9 für die verschiedenen spektralen Komponenten.

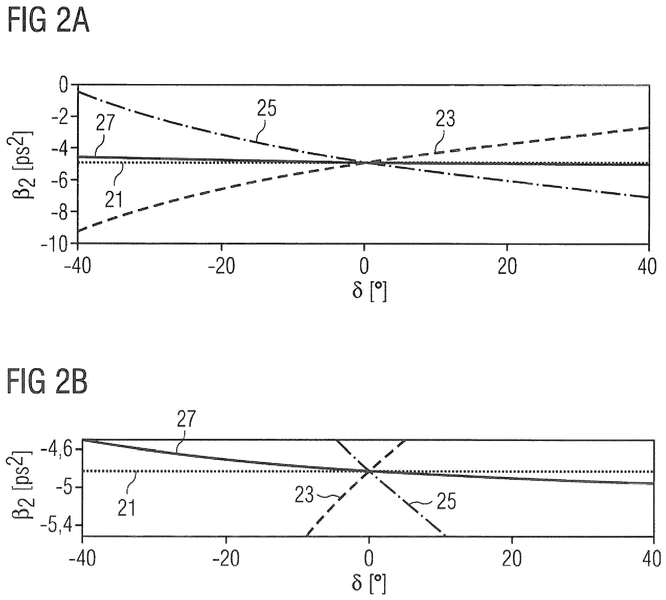

Die Beiträge dieser Effekte zu dem Phasenunterschied zwischen den verschiedenen spektralen Komponenten bzw. der Dispersion wird in den Figuren 2A und 2B für eine Glasplatte dargestellt. Die Figuren 2A und 2B verdeutlichen den $\beta_2$-Koeffizienten der Phase $(\phi=\beta_0+\beta_1*(\omega-\omega_0)+\beta_2/2*(\omega-\omega_0)^2+...)$ unter Berücksichtigung der zuvor erläuterten Beträge zum Funktionsprinzip. Der $\beta_2$-Koeffizient ist in Abhängigkeit vom Drehwinkel der Glasplatte angegeben, wobei Fig. 2B die Beiträge im Bereich um die 0°-Stellung der Glasplatte vergrößert darstellt. In der 0°-Stellung trifft die zentrale Wellenlänge senkrecht auf die Glasplatte (Einfallswinkel 0°). Die angegebenen Werte entsprechen einem Aufbau mit einem senkrechten Gitterabstand $l_{Gitter}$ von 50 mm, einer Plattendicke von 10 mm und einer Gitterkonstante von 588 nm. In den Figuren 2A und 2B sind die Graphen wie folgt den Beiträgen zugeordnet:

21 (punktierte Linie): Kompressor ohne Platte, wobei der Abstand der Kompressorgitter, so angepasst ist, dass $\beta_2$ genauso groß ist, wie mit der Platte bei einem Drehwinkel $\delta$ der 0°-Stellung.

23 (gestrichelte Linie): Es wird der Beitrag der Platte zur Phase für den Weg zwischen den Gittern gemäß den Punkten 1) und 2a) des Funktionsprinzips berücksichtigt.

25 (strichpunktierte Linie): Es wird der Beitrag der Platte zur Phase für den Weg zwischen den Gittern und dem Beitrag des 2. Gitters gemäß den Punkten 1), 2a) und 2b) des Funktionsprinzips berücksichtigt.

27 (durchgezogene Linie): Es werden alle Beiträge der Platte gemäß den Punkten 1), 2a), 2b) und 2c) des Funktionsprinzips berücksichtigt.

Man erkennt, dass im dargestellten Winkelbereich alle Beiträge für die Dispersionsanpassung relevant sind, da sie im Wesentlichen von derselben Größenordnung sind (siehe insbesondere Fig. 2B).

Vergleicht man die Beiträge zu $\beta_2$ der Plattendrehung mit den $\beta_2$-Beiträgen der Längenänderung des Gitterkompressors, liegen diese ferner in einer vergleichbaren Größenordnung.

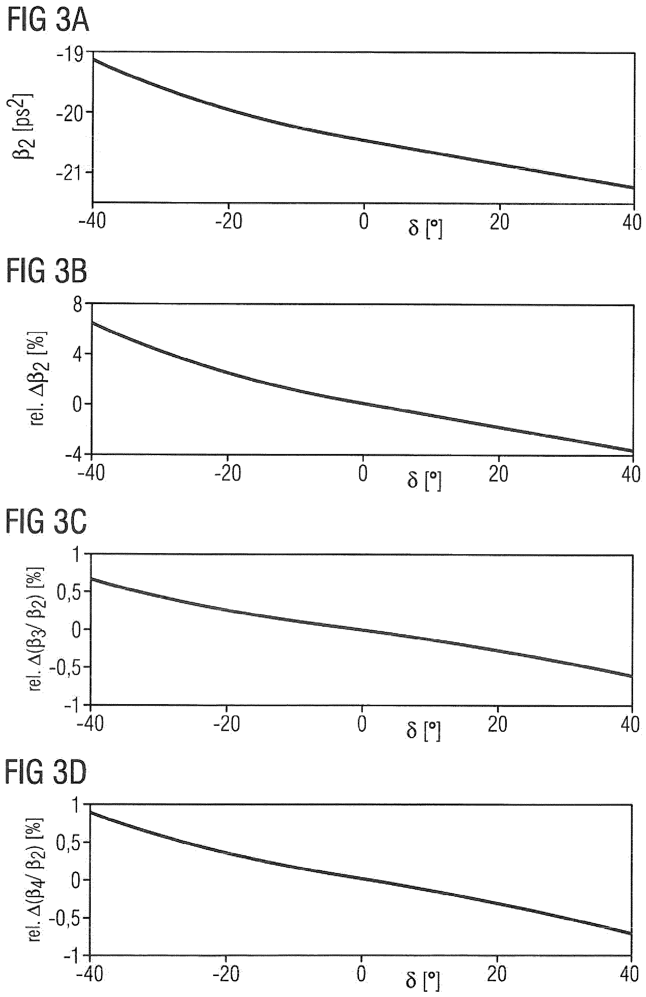

Wie in den Figuren 3A bis 3D gezeigt wird, ändert sich insbesondere für kleine Gitterkonstanten beim Drehen der Glasplatte das Verhältnis der Dispersionsordnungen deutlich geringer als $\beta_2$ selbst. In den Figuren 3C und 3D ist beispielhaft als Wert ein relatives Delta - rel. $\Delta(\beta3/\beta2)$ bzw. rel. $\Delta(\beta4/\beta2)$ - aufgetragen, der das Verhältnis der Dispersionsordnungen charakterisiert. Dabei ist z.B. das relative Delta rel. $\Delta(\beta3/\beta2)$ gegeben durch:

$$\left( 1 - \frac{\beta_3/\beta_2}{\beta_{3,0}/\beta_{2,0}} \right) * 100\%$$

Da das Drehen der Glasplatte näherungsweise dieselbe Wirkung wie das Ändern des Gitterabstands hat, kann eine Abstandsänderung durch eine Drehwinkeländerung bei der Dispersionsanpassung ersetzt werden. Die Glasplatte kann somit zum Einstellen oder Regeln der Pulsdauer/Pulsform insbesondere bei kleinen Gitterkonstanten verwendet werden.

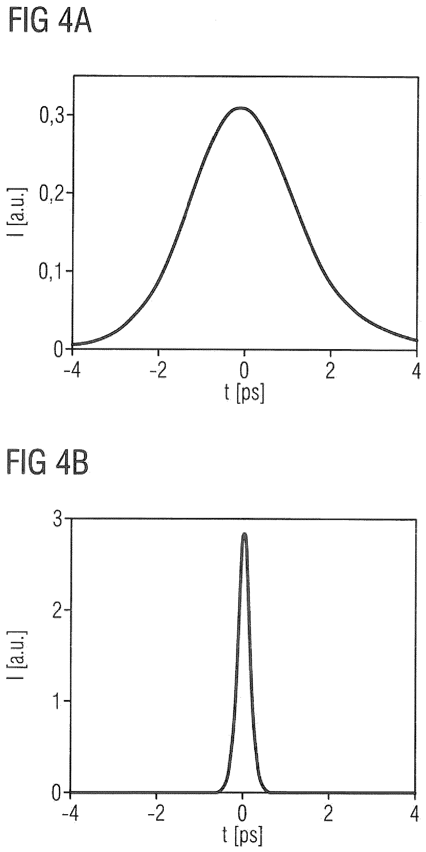

Die Figuren 4A und 4B verdeutlichen eine beispielhafte Rechnung zur Pulskompression für einen Puls, dessen spektrale Breite eine minimal mögliche Dauer von 300 fs erlaubt. Fig. 4A zeigt einen Intensitätsverlauf bei einer Justage der Dispersionsanpassungseinheit, bei der der Kompressor eine nicht optimale Stellung der Glasplatte bzw. einen nicht optimalen Abstand der Kompressorgitter aufweist. Durch Optimierung der Winkelstellung der Glasplatte lässt sich die Pulsdauer wesentlich komprimieren, wie im Intensitätsverlauf der Fig. 4B dargestellt wird.

Bei sehr kurzen Pulsen mit hohen spektralen Breiten reagiert die Pulsqualität (insbesondere die Pulsdauer und die Pulsform) sensitiv auf die höheren Ordnungen $\beta_3$, $\beta_4$... von $\beta$. So kann schon durch Drehen der Glasplatte in nur einem kleinen Winkelbereich die Pulsdauer variieren, wodurch sich insbesondere für große Gitterkonstanten und (ultra-) kurze Pulse die Optimierung der Pulsqualität als eine weitere Anwendungsmöglichkeit der hierin offenbarten Konzepte ergibt.

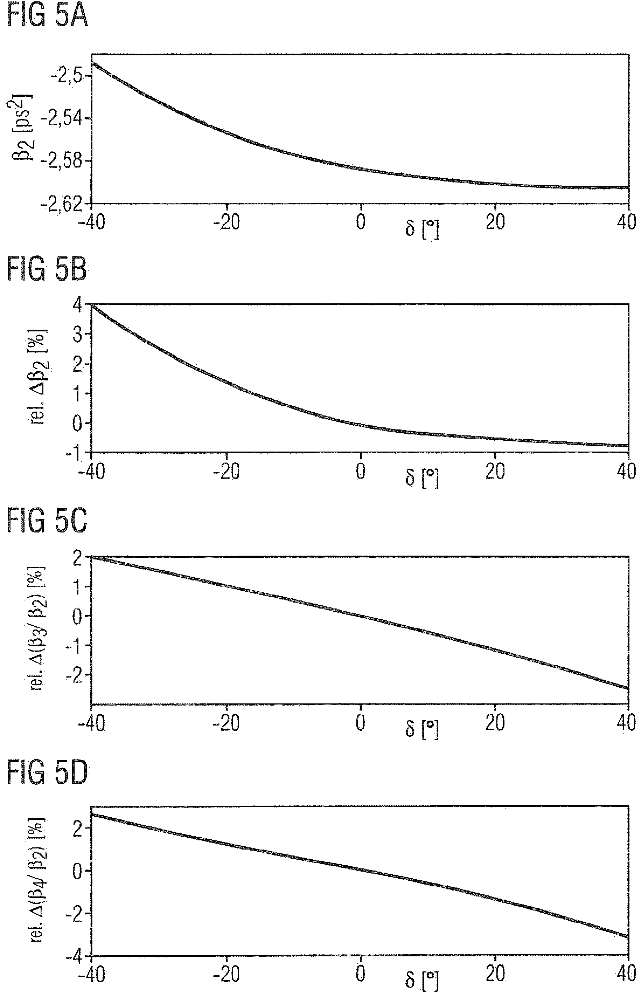

Für große Gitterkonstanten ändert sich das Verhältnis von $\beta_2$ zu den höheren Ordnungen $\beta_3$, $\beta_4$... deutlich stärker als bei kleinen Gitterkonstanten. Dies verdeutlichen die Figuren 5A bis 5D, in denen analog zu den Figuren 3A bis 3D beispielhafte Winkelabhängigkeiten von $\beta_2$ und die relativen Verhältnisse zu $\beta_2$ für eine Gitterkonstante von 588 nm dargestellt werden. Die Beiträge zu den höheren Ordnungen lassen sich nun ferner dazu nutzen, um mittels einer Anpassung des Einfallswinkels, d.h. der Drehung der Glasplatte, und des Abstands der Kompressorgitter die Pulsqualität zu optimieren.

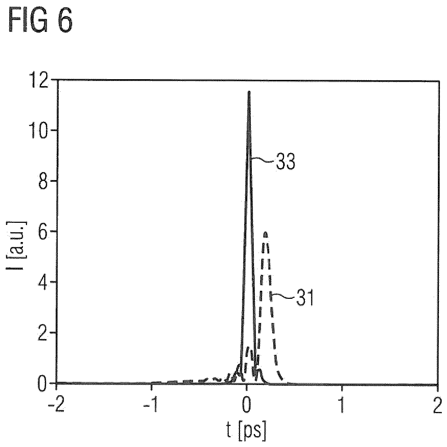

Fig. 6 zeigt eine Beispielrechnung für eine nicht optimale Abstimmung eines Strecker-Kompressor-Systems bei der Kompression eines Pulses mit einer spektralen Breite, die eine minimal erreichbare Pulsdauer von 70 fs erlauben würde. Ohne Verwendung einer Glasplatte zeigt die gestrichelte Linie 31 einen Intensitätsverlauf, der das Ergebnis einer rein auf der Kompressorabstandsanpassung basierenden Pulskomprimierung ist. Es ergibt sich z.B. eine Pulsdauer von gut 120 fs nach dem Kompressor ohne Glasplatte. Ergänzt man das System erfindungsgemäß mit einer Glasplatte im Kompressor und optimiert sowohl den Abstand der Kompressorgitter als auch den Drehwinkel $\delta$ der Glasplatte, lässt sich die Pulsdauer weiter verkürzen, z.B. auf unter 80 fs, wie die durchgezogene Linie 33 eines beispielhaft berechneten Intensitätsverlaufs zeigt.

Zurückkommend auf Fig. 1 umfasst das Lasersystem 1 die Steuerungseinheit 13 und die Pulsdauermessvorrichtung 15 und die optische Einheit 4 umfasst die Winkeleinstellvorrichtung 17 zur Einstellung der Winkelstellung des optischen Elements 11 in Abhängigkeit einer Pulsdauermessung.

Beispielsweise ist die Pulsdauermessvorrichtung 15 zur Ausgabe eines Pulsdauer-abhängigen Messsignals (z.B. eines Autokorrelationssignals) ausgebildet. Beispielsweise wird der Pulsdauermessvorrichtung 15 ein an einem Spiegel 19 abgegriffener (nichtreflektierter) Anteil des Ausgangsstrahls 10 zugeführt. Die Pulsdauermessvorrichtung 15 leitet das Messsignal zur Steuerungseinheit 13, die ein Steuerungssignal an die Winkeleinstellvorrichtung 17 ausgibt. Die Steuerungseinheit 13 verwendet beispielsweise einen Optimierungsalgorithmus, um die Winkelstellung (und eventuell den Abstand der dispersiven Elemente) zur Pulsdauerverkürzung zu variieren und hinsichtlich einer kürzesten Pulsdauer oder einer für eine spezielle Anwendung bei der Materialbearbeitung benötigte Pulsdauer (oder Pulsform) einzustellen.

Die Winkeleinstelleinheit 17 kann beispielsweise eine motorisiert und/oder über ein Piezostellelement drehbare Halterung des optischen Elements sein, die eine, insbesondere stufenlose, Einstellung des Drehwinkels $\delta$ erlaubt. Dies erlaubt beispielsweise eine Einstellung insbesondere Regelung der Pulsdauer durch eine aktiv angesteuerte, insbesondere geregelte, Drehwinkelanpassung.

Fig. 7 zeigt eine beispielhafte Implementierung der hierin offenbarten Konzepte der Dispersionsanpassung in einer als Gitterstrecker ausgebildeten Dispersionsanpassungseinheit 50. Um invertierte Winkeldispersionsbeiträge zu erreichen, kann in einem Strecker z.B. ein Linsensystem (z.B. eine Teleskopanordnung) zwischen den Wechselwirkungsbereichen auf dem mindestens einen dispersiven Element vorgesehen werden, wobei in Fig. 7 beispielhaft zwei Transmissionsgitter 7A', 7B' dargestellt sind. Wie bei Kompressoren kann das mindestens eine dispersive Element alternativ als z.B. Reflexionsgitter, Prisma oder Grism ausgeführt werden.

Die den Laserstrahl fokussierende Anordnung bewirkt eine Abbildung des ersten Gitters, so dass die aufgefächerten spektralen Komponenten zusammenlaufen. Beispielhaft ist in Fig. 7 eine Teleskopanordnung 51 mit zwei Linsen 51A, 51B gezeigt. Ein als plan-parallele Platte ausgeführtes optisches Element 11' wird nach der Teleskopanordnung 51 vor dem zweiten Gitter 7B' eingebracht. Es ist - wie die Platte 11 in Fig. 1 - drehbar gelagert und kann hinsichtlich des Einfallswinkels zur Anpassung der Dispersionsverhaltens der Streckeranordnung eingestellt werden.

Wie in Fig. 1 ist die Dispersionsanpassungseinheit 50 mit einem Reflektorelement 9' gefaltet. Im Unterschied zur Kompressoranordnung der Fig. 1 ist das optische Element 11' in einem zusammenlaufenden aufgefächerten Bereich angeordnet. Alternativ oder zusätzlich kann ein optisches Element ferner vor der ersten Linse 51A angeordnet sein. Ferner kann die Fokussieranordnung eine oder mehrere Linsen und/oder Spiegel aufweisen.

Die zuvor hinsichtlich der Kompressoranordnung beschriebenen Dispersionsaspekte lassen sich auf die Streckanordnung übertragen, insbesondere das Funktionsprinzip und die Anwendungsmöglichkeiten zur Pulsdauer- und Pulsformeinstellung.

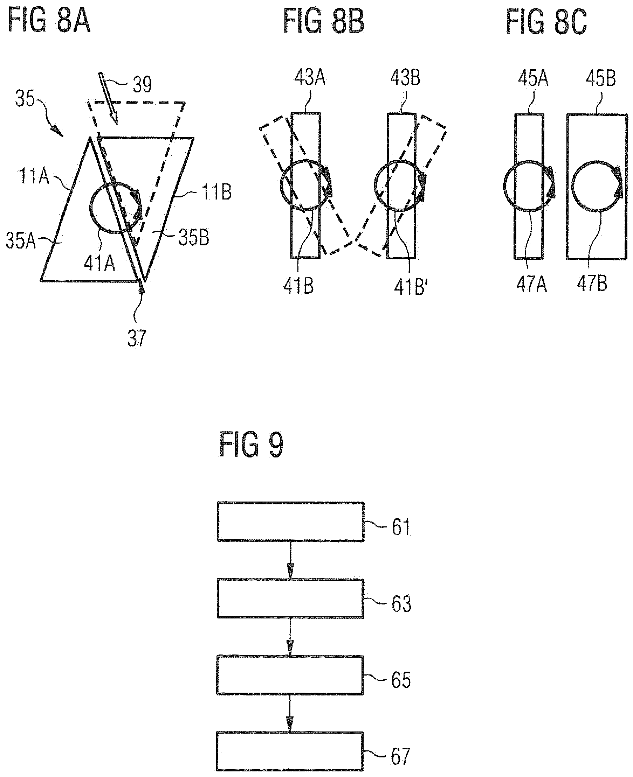

Die Figuren 8A bis 8C zeigen weitere Ausgestaltungen von drehbar gelagerten optischen Elementen für optische Einheiten, die in Strecker- und Kompressoranordnungen eingesetzt werden können.

Fig. 8A stellt ein z.B. aus der Ultrakurzoptik bekanntes optisches Keilpaar 35 (Doppel-Keil-Struktur) - als Beispiel einer Mehrkeilanordnung - mit beispielsweise identischen Keile 35A, 35B auf, das als drehbares optisches Element einer optischen Einheit 4 eingesetzt werden kann. Die Keile 35A, 35B weisen jeweils zwei plan ausgebildete Seitenflächen auf, die unter einem spitzen Winkel zusammenlaufen. Die Keile 35A, 35B sind derart im aufgefächerten Strahlengang angeordnet, dass je eine der Seitenflächen der Keile als zueinander parallel verlaufende Eintrittsoberfläche 11A bzw. Austrittsoberfläche 11B des optischen Elements wirkt. Die anderen Seiten bilden einen zwischen den Keilen liegenden dünnen Luftspalt 37 mit z.B. einer im Wesentlichen konstanten Dicke.

Mindestens einer der Keile 35A, 35B ist verschiebbar (beispielsweise auf einem Linearverschiebetisch) gelagert (Pfeil 39), so dass sich die Dicke des Keilpaars 35 je nach Einschubstellung der Keile 35A, 35B einstellen lässt und entsprechend der Einschub als weitere Einstellgröße bei der Dispersionsanpassung genutzt werden kann. Die Winkeleinstellung erfolgt durch Drehung des gesamten Doppelkeils 35 (Pfeil 41A).

In einigen Ausführungsformen kann der Doppelkeil als eine spezielle Ausführungsform einer Glasplatte eingesetzt werden, bei dem die beiden Keile gemeinsam um einen gleichen Winkel gedreht werden können.

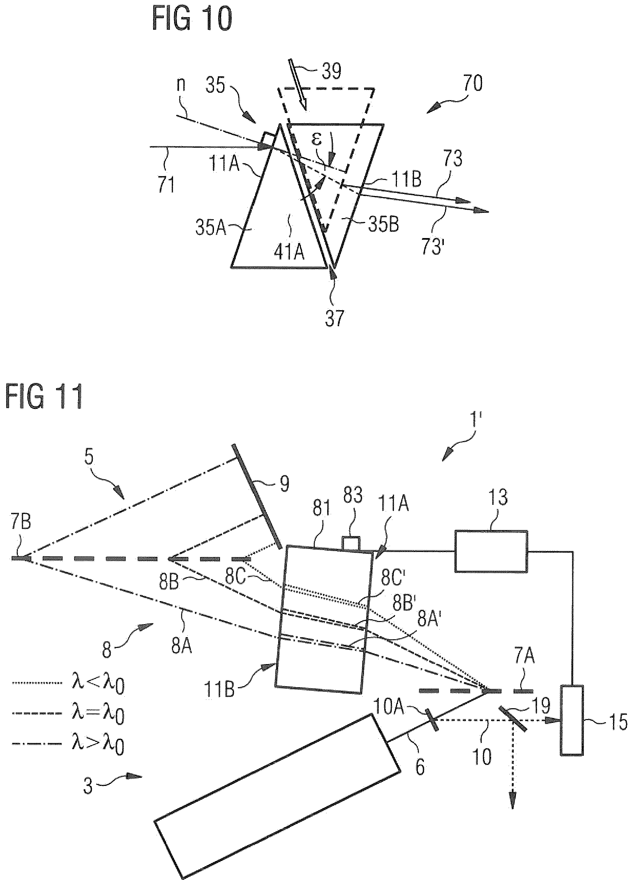

Mehrkeilanordnungen sind ferner eine Möglichkeit zur Ausbildung einer Ausführungsform, bei der keine mechanische Drehung des optischen Elements notwendig ist. Dies ist nachfolgend beispielhaft in Zusammenhang mit Fig. 10 erläutert. Weitere Ausführungsformen die keine mechanische Bewegung bedingen sind in Zusammenhang mit Fig. 11 beispielhaft beschrieben und basieren beispielsweise auf einer Änderung des Brechungsindex beispielsweise mit einem EOM oder einem doppelbrechenden Kristall.

Zurückkommend auf optische Einheiten mit drehbaren optischen Elementen zeigt Fig. 8B eine weitere Ausführungsform, die es erlaubt, in einer Ausgangslage die Winkeldispersion im Wesentlichen unverändert zu lassen. Dazu umfasst die optische Einheit ein Paar von identischen, z.B. plan-parallelen, transmittierenden Platten 43A, 43B, die u.a. in entgegengesetzte Richtungen (Pfeile 41B, 41B') verdreht werden können. Dadurch kann bei einer entsprechenden Ausrichtung (gestrichelt in Fig. 8B angedeutet) der Parallelversatz der ersten Platte 43A durch die zweite Platte 43B ausgeglichen werden, so dass in dieser Stellung die Dispersion allein durch den Abstand der z.B. Gitter und die Materialdispersion der Platten 42A, 43B bestimmt wird.

Fig. 8C zeigt eine weitere Anordnung von zwei plan-parallelen Platten 45A, 45B, allerdings von unterschiedlicher Dicke und/oder unterschiedlichem Material. Beispielsweise kann eine dünne Platte 45A zur Feinanpassung der Dispersionseigenschaften und eine dicke Platte 45B zur Grobeinstellung verwendet werden. Die Einstellung der Dispersion erfolgt wiederum durch Drehung einer oder beider Platten 45A, 45B (Pfeile 47A, 47B).

Die in den Figuren 8A bis 8C gezeigten Ausführungsformen sind Beispiele für optische Einheiten, die aus mehreren optischen Elementen bestehen, die zusammen plan-parallele Eingangsflächen und Ausgangsflächen bereitstellen und entsprechend die spektralen Ausbreitungsrichtungen vor und nach der optischen Einheit erhalten.

Weitere Konfigurationen von Dispersionsanpassungseinheiten umfassen beispielsweise nicht gefaltete Anordnungen mit zwei Paaren von dispersiven Elementen, wobei in mindestens einem der aufgefächerten Bereiche eine optische Einheit angeordnet ist. Ferner können Strecker- und Kompressoranordnungen insbesondere hinsichtlich der optischen Elemente aufeinander angepasst werden.

Beispielhafte Lasersysteme, in denen die hierin vorgeschlagenen Dispersionsanpassungseinheiten eingesetzt werden können, umfassen Lasersysteme mit Pulsenergien von z.B. 0,1 $\mu$J und größer und Pulsdauern im Bereich von z.B. 50 ps und kürzer. Die Anwendungsbereiche derartiger Lasersysteme umfassen Glasschneiden (z.B. Schneiden von Displays und Medizinprodukten), Beschriften, medizinische Anwendungen wie z.B. Augenoperationen, Bohren von beispielsweise Einspritzdüsen und das Durchführen wissenschaftlicher Experimente.

Basierend auf den hierin offenbarten Konzepten kann ein Verfahren zur Dispersionsanpassung die folgenden, in Fig. 9 gezeigten, Schritte umfassen.

Durch spektrales Auffächern und Zusammenführen eines gepulsten Laserstrahls wird ein Winkeldispersionsanteil bereitgestellt (Schritt 61). Durch Einbringen eines optischen Elements im aufgefächerten Bereich des gepulsten Laserstrahls (Schritt 63) wird Einfluss auf den Winkeldispersionsanteil genommen, sei es z.B. über eine plan-parallele Platte, eine Mehr-Keil-Struktur, EOM etc. Insbesondere kann dabei auch die Materialdispersion durch das eingebrachte optische Element bei der Dispersionsbetrachtung berücksichtigt werden. Ein optisches Element in Form einer plan-parallelen Platte ist beispielsweise drehbar gelagert und so in seiner Winkelstellung zum Laserstrahl einstellbar. Falls ferner zusätzlich eine Pulsdauer des Laserpulses nach der Dispersionsanpassung gemessen wird (Schritt 65), kann die das optische Element beispielsweise in der Winkelposition in Abhängigkeit der gemessenen Pulsdauer zur Anpassung der Dispersion eingestellt werden (Schritt 67). Dies erlaubt insbesondere eine Verkürzung oder Streckung der Pulsdauer sowie ein Pulsformen aufgrund der vielfältig kombinierbaren Dispersionsanteile in der Dispersionsanpassungseinheit. Überdies kann die Dispersionsanpassung zusammen mit oder ergänzend zu einer Winkeldispersionsanpassung vorgenommen werden.

Ferner kann beispielsweise in Systemen, bei denen dispersive Rahmenbedingungen in Abhängigkeit der angeforderten Pulsenergien z.B. aufgrund von Selbstphasenmodulation reproduzierbar variieren, Steuerungskonzepte umgesetzt werden, die beispielsweise in Abhängigkeit der angeforderten Pulsenergie die optische Einheit, beispielsweise die Winkelstellung des optischen Elements oder die am EOM angelegte Spannung, einstellen. Entsprechend kann die zuvor angesprochene Pulsdauermessung durch die Bereitstellung eines Pulsenergieparameters ersetzt oder ergänzt werden. Beispielsweise kann bei Pulsen mit B-Integralwerten kleiner 1 rad (im Wesentlichen liegt keine Selbstphasenmodulation) ein nahezu orthogonaler Einfall auf das optische Element eingestellt werden. Mit zunehmender Pulsenergie wird anschließend das optische Element verdreht, um die dispersiven Auswirkungen auf die Pulslänge zu kompensieren.

Ferner kann das Verändern der Ausbreitungsrichtung und/oder der Ausbreitungslänge einen eintrittswinkelabhängigen Parallelversatz der einzelnen Spektralkomponenten der elektromagnetischen Strahlung bezüglich der Ausbreitung der einzelnen Spektralkomponenten bewirken. Das Verändern der Ausbreitungsrichtung und/oder der Ausbreitungslänge kann durch ein Drehen des optischen Elements und/oder durch ein Ändern einer Dicke und/oder des Brechungsindex und/oder des Beugungsparameters des optische Elements, insbesondere zum Ändern der im Winkeldispersionsbereich erzeugten Dispersion, bewirkt werden.

Das Verfahren kann die folgenden Schritte aufweisen: Messen einer Pulsdauer des Laserpulses nach der Dispersionsanpassung und Einstellen der Ausbreitungsrichtung und/oder der Ausbreitungslänge im optischen Element, insbesondere der Winkelposition, in Abhängigkeit der gemessenen Pulsdauer zur Anpassung der Dispersion, insbesondere zur Verkürzung oder Streckung, der Laserpulse. Ferner kann das Verfahren die folgenden Schritte aufweisen: Bereitstellen eines Selbstphasenmodulation-Dispersionsbeitragparameters, insbesondere eines Pulsenergieparameters, und Verändern der Ausbreitungsrichtung und/oder der Ausbreitungslänge in Abhängigkeit des Selbstphasenmodulation-Dispersionsbeitragparameters, insbesondere zur Kompensation der Selbstphasenmodulation bedingten Streckung von Laserpulsen.

Allgemein kann eine Einstellvorrichtung des optischen Elements dazu ausgebildet sein, in Abhängigkeit eines pulsdauerabhängigen Messsignals, eines mittleren Pulsleistungsparameters, eines Spitzen-Pulsleistungsparameters und/oder eines Pulsenergieparameters einen Dispersionsbeitrag der Dispersionsanpassungseinheit, insbesondere zur Zuordnung eines Selbstphasenmodulation-Dispersionsbeitrags des optischen Strahlengangs vor und/oder nach der Dispersionsanpassungseinheit, einzustellen.

Dabei kann in einigen Ausführungsformen die Dicke des optischen Elements z.B. derart gewählt werden, dass die Pulslängenminimierung ohne eine Abstandsänderung z.B. des Gitterpaares möglich ist. Allgemein hängt die benötige Dicke von Parametern der verschiedenen optischen Komponenten der Dispersionsanpassungseinheit ab, z.B. von der umgesetzten dispersiven Winkelauffächerung beispielsweise bedingt durch den senkrechten Linienabstand der Gitter, vom Einfallswinkel (nahezu orthogonaler Einfall oder schräger Einfall z.B. unter Brewster-Winkel bzgl. der Zentralwellenlänge beeinflusst die effektive Dicke). Ferner hängt die benötige Dicke von Laserstrahlparametern wie der Dauer der Laserpulse, der spektralen Breite der Laserpulse, der Laserpulsenergie, der Selbstphasenmodulationsneigung des optischen Systems etc. ab.

Fig. 10 zeigt ferner, dass eine Dickenänderung einer Mehrkeilanordnung, beispielhaft gezeigt für eine Doppel-Keil-Struktur 70 gemäß Fig. 8B, zu einem eintrittswinkelabhängigen Parallelversatz der einzelnen Spektralkomponenten der elektromagnetischen Strahlung bezüglich der Ausbreitung der einzelnen Spektralkomponenten vor und nach der optischen Einheit führt.

Im Speziellen ist für zwei Dicken gezeigt, dass sich für eine einfallende Spektralkomponente mit einem optischen Weg 71, der nicht senkrecht zur Eintrittsoberfläche 11A des Keils 35A verläuft, aufgrund des schrägen Durchlaufens durch die Keile 35A, 35B unter einem Winkel $\varepsilon (\neq 0)$ bzgl. der Normalen n zur Eintrittsoberfläche 11A sich ein Strahlversatz ergibt, der von der Dicke der Doppel-Keil-Struktur 70 abhängt. Je dicker die Doppel-Keil-Struktur 70 eingestellt wird, desto weiter ist ein austretender optischer Weg 73, 73' bzgl. des einfallenden optischen Weges 71 parallel verschoben. Da unterschiedliche Spektralkomponenten im Winkeldispersionsbereich unter einem Winkel zueinander verlaufende optische Wege zugeordnet sind, variiert der Winkel $\varepsilon$ und entsprechend der parallele Strahlversatz, so dass allein eine Änderung der Dicke des optischen Elements (durch eine Verschiebung entlang des Pfeils 39 in Fig. 10) zu einer Änderung der Winkeldispersion führt und entsprechend eine Dispersionsanpassung ermöglicht. Hierbei sei ergänzend erwähnt, dass der Versatz, wie zuvor erläutert, noch weitere Phaseneffekte nach sich zieht, beispielsweise unterschiedliche Wege zwischen dem zweiten Wechselwirkungsbereich und dem Rückreflektor etc.

Der Vollständigkeit sei auf weitere Ausführungsformen von Mehrkeilstrukturen mit drei oder mehr Keilen hingewiesen, die dem Fachmann bekannt sind und analog eingesetzt werden können, solange die erforderlichen optischen Rahmenbedingungen eingehalten werden.

In weiteren Ausführungsformen können optische Elemente in der optischen Einheit 4 eingesetzt werden, deren optische Eigenschaften wie Brechungsindex und Doppelbrechung gezielt angesteuert werden können.

Fig. 11 zeigt ein Lasersystem 1' mit einem Aufbau, der dem in Fig. 1 gezeigten ähnlich ist. Anstelle der Platte 11 ist allerdings ein elektrooptischer Modulator (EOM) 81 mit Elektroden 83 vorgesehen. Die an den Elektroden 83 angelegte Spannung kann mit der Steuerungsvorrichtung 13 eingestellt werden. In Abhängigkeit von der Spannung stellt sich im EOM 81 ein spezifischer Brechungsindex ein, der die optischen Wege 8A, 8B, 8C im Winkeldispersionsbereich 8 bestimmt. Ändert man die Spannung und damit den Brechungsindex, ändern sich auch die optischen Wege. Dies ist beispielhaft im EOM 81 durch optische Wege 8A', 8B', 8C' dargestellt. Die Spannungseinstellung des EOM 81 kann beispielsweise eine - im Vergleich zur mechanischen Dreh- oder Einschubseinstellung - schnellere Anpassung der Dispersion erlauben. Ferner kann aufgrund der festen räumlichen Integration eine auf den Einfallswinkel optimierte Antireflexbeschichtung eingesetzt werden. Hinsichtlich der verbleibenden Komponenten und der Auswirkung der Änderung der optischen Wege wird auf die vorausgehende Beschreibung verwiesen.

In analogen Konfigurationen können Anordnungen von zwei akustooptischen Modulatoren zur Einstellung der optischen Wege als optische Elemente eingesetzt werden.

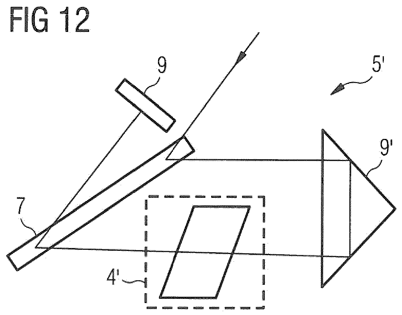

Zur Vollständigkeit zeigt Fig. 12 eine Dispersionsanpassungseinheit 5', die z.B. anstelle der Dispersionsanpassungseinheiten 5 in den Lasersystemen 1 oder 1' verwendet werden kann. Die Dispersionsanpassungseinheit 5' ist beispielhaft als Kompressor ausgeführt, kann aber analog auch als Strecker ausgeführt werden. Sie weist eine optischen Einheit 4' mit einem wie hierin offenbarten optischen Element zur Dispersionsanpassung auf. Wie z.B. in Fig. 1 weist die Dispersionsanpassungseinheit 5' den Rückreflektor 9 auf, der einen höhenversetzten Hin- und Rücklauf bereitstellt. Über ein Umlenkprisma 9' erfolgt eine zweite Faltung, so dass nur ein dispersives Element 7 benötigt wird. Denn durch die zweite Faltung können auf dem (einen) dispersiven Element 7 räumlich voneinander getrennte Wechselwirkungsbereiche zwischen Laserstrahlung und dem dispersiven Element 7 bereitgestellt werden. Entsprechend ergibt sich ein kompakter optischer Aufbau.

Die beispielhaften Ausführungsformen wurden unter Bezug auf Laserlicht insbesondere im erweiterten spektralen Bereich von Ultrakurzpulslasern (üblicherweise im Wellenlängenbereich von 200 nm bis 10 μm je nach Anwendung) beschrieben. Eine Anwendung ist aber allgemein auf elektromagnetische Strahlung mit einer spektralen Breite übertragbar, vorausgesetzt, dass das Konzept der Winkeldispersionsvariation umgesetzt werden kann.

Die hierin beschriebenen Ausführungsformen von Dispersionsanpassungseinheit können ferner im Einfach- oder Mehrfachdurchgang eingesetzt werden und/oder bei Oszillator-Systemen mit Freistrahlkompressoren und/oder -streckern Anwendung finden.

Wie aus den hierin beschriebenen Ausführungsformen ersichtlich ist, kann das optische Element z.B. unabhängig von dem mindestens einem dispersiven Element in seiner Position und/oder Ausrichtung bezüglich dem mindestens einem dispersiven Element eingestellt werden.

Wie aus den hierin beschriebenen Ausführungsformen ferner ersichtlich ist, besteht das optischen Element, insbesondere die eine oder die mehreren plan-parallelen (Glas-)Platten oder die optischen Keile, vorzugsweise aus einem Material mit einem über das optische Element - insbesondere im Bereich des Strahldurchtritts - homogen ausgebildeten Brechungsindex. Die Homogenität des Brechungsindex ist dabei derart, dass die Ablenkung des Lichts nicht von Änderungen des Brechungsindex im Material beeinflusst wird, wenn beispielsweise eine Drehung des optischen Elements vorgenommen wird. Insbesondere wird der Parallelversatz beim Durchtritt der Strahlen durch die z.B. plan-parallelen (Glas-)Platten mit einem entsprechend homogen ausgebildeten Brechungsindex nicht von einer Änderung des Brechungsindex im Material selbst beeinflusst/-gestört.

## Patentansprüche

1. Dispersionsanpassungseinheit (5) für elektromagnetische Strahlung mit einer spektralen Breite, insbesondere für Laserpulse, mit

   einer Anordnung mit mindestens einem dispersiven Element (7, 7A, 7B) zur Erzeugung von Winkeldispersion in einem durch zwei Wechselwirkungsbereiche der elektromagnetischen Strahlung mit dem mindestens einen dispersiven Element (7, 7A, 7B) begrenzten Winkeldispersionsbereich (8), in dem einzelnen Spektralkomponenten der elektromagnetischen Strahlung unter einem Winkel zueinander verlaufende optische Wege (8A, 8B, 8C) zugeordnet sind, und
   einer im Winkeldispersionsbereich (8) zwischen den zwei Wechselwirkungsbereichen der elektromagnetischen Strahlung mit dem mindestens einen dispersiven Element (7, 7A, 7B) angeordneten optischen Einheit (4) mit
einer die elektromagnetische Strahlung transmittierenden, plan-parallelen optischen Platte (11) mit einer planen Eintrittsoberfläche (11A) und einer planen Austrittsoberfläche (11B), die zueinander parallel angeordnet sind, wobei die optische Platte (11) einen eintrittswinkelabhängigen Parallelversatz der einzelnen Spektralkomponenten der elektromagnetischen Strahlung bezüglich der Ausbreitung der einzelnen Spektralkomponenten vor und nach der optischen Platte (11) bewirkt.

2. Dispersionsanpassungseinheit (5) nach Anspruch 1, wobei die Eintrittsoberfläche (11A) und die Austrittsoberfläche (11B) senkrecht zu einer durch die unter einem Winkel zueinander verlaufenden optischen Wege (8A, 8B, 8C) aufgespannten Auffächerungsebene angeordnet sind, und/oder

   wobei die Eintrittsoberfläche (11A) und/oder die Austrittsoberfläche (11B) antireflexbeschichtet sind, und/oder
   wobei das Material der plan-parallelen Platte (11, 43A, 43B, 45A, 45B) Quarz, YAG, Saphir oder SF 10 ist und/oder eine Dicke von mindestens 0,1 mm oder im Bereich von ca. 0,5 mm bis ca. 10 mm aufweist.

3. Dispersionsanpassungseinheit (5) für elektromagnetische Strahlung mit einer spektralen Breite, insbesondere für Laserpulse, mit

   einer Anordnung mit mindestens einem dispersiven Element (7, 7A, 7B) zur Erzeugung von Winkeldispersion in einem durch zwei Wechselwirkungsbereiche der elektromagnetischen Strahlung mit dem mindestens einen dispersiven Element (7, 7A, 7B) begrenzten Winkeldispersionsbereich (8), in dem einzelnen Spektralkomponenten der elektromagnetischen Strahlung unter einem Winkel zueinander verlaufende optische Wege (8A, 8B, 8C) zugeordnet sind, und
   einer im Winkeldispersionsbereich (8) zwischen den zwei Wechselwirkungsbereichen der elektromagnetischen Strahlung mit dem mindestens einen dispersiven Element (7, 7A, 7B) angeordneten optischen Einheit (4) mit
   einem die elektromagnetische Strahlung transmittierenden optischen Element (11, 70, 81), das einen eintrittswinkelabhängigen Parallelversatz der einzelnen Spektralkomponenten der elektromagnetischen Strahlung bezüglich der Ausbreitung der einzelnen Spektralkomponenten vor und nach der optischen Einheit (11, 70, 81) bewirkt.

**4.** Dispersionsanpassungseinheit (5) nach Anspruch 3, wobei die optische Einheit (11, 70, 81) ferner eine Einstellvorrichtung (17, 83) aufweist, die zum Verändern des Parallelversatzes der einzelnen Spektralkomponenten ausgebildet ist.

**5.** Dispersionsanpassungseinheit (5) nach Anspruch 3, wobei

- das optische Element (11, 70, 81) eine plane Eintrittsoberfläche (11A) und eine plane Austrittsoberfläche (11B) aufweist, die zueinander parallel angeordnet sind, und/oder die Einstellvorrichtung zum Ändern der räumlichen Ausrichtung des optischen Elements (11) im Winkeldispersionsbereich (8) für das Verändern des Parallelversatzes ausgebildet ist, oder

das optische Element (70) als Mehrkeilanordnung, insbesondere als Doppel-Keil-Struktur, ausgebildet ist und die Einstellvorrichtung zum Ändern einer Dicke und/oder einer Winkelstellung des als Mehrkeilanordnung ausgebildeten, optischen Elements (70) für das Verändern des Parallelversatzes ausgebildet ist, oder
das optische Element (81) als elektrooptischer Modulator ausgebildet ist und die Einstellvorrichtung zum Ändern eines Brechungsindex des als elektrooptischer Modulator ausgebildeten, optischen Elements (81) für das Verändern des Parallelversatzes ausgebildet ist, oder
das optische Element als Paar von akustooptischen Modulatoren ausgebildet ist und die Einstellvorrichtung zum Ändern eines Beugungsparameters des als Paar von akustooptischen Modulatoren ausgebildeten, optischen Elements für das Verändern des Parallelversatzes ausgebildet ist.

**6.** Dispersionsanpassungseinheit (5) nach einem der Ansprüche 3 oder 5, wobei das optische Element (11, 70, 81) eine Eintrittsoberfläche (11A) und eine Austrittsoberfläche (11B) aufweist, die im Wesentlichen zueinander parallel verlaufen und in einem Abstand zueinander angeordnet sind, und/oder wobei das optische Element (11, 70, 81) unabhängig von dem mindestens einem dispersiven Element (7, 7A, 7B) in seiner Position und/oder Ausrichtung im Strahlengang bzgl. dem mindestens einem dispersiven Element (7, 7A, 7B) einstellbar ist.

**7.** Dispersionsanpassungseinheit (5) nach einem der Ansprüche 3, 5 oder 6, wobei das optische Element (11, 70, 81) zum Einstellen der Winkelstellung des optischen Elements (11, 70, 81) bezüglich des Strahlengangs drehbar gelagert ist, so dass der Eintrittswinkel und der Austrittswinkel der optischen Wege (8A, 8B, 8C) bezüglich einer Eintrittsoberfläche (11A) und einer Austrittsoberfläche (11B) des optischen Elements (11, 70,81) einstellbar sind.

**8.** Dispersionsanpassungseinheit (5) nach einem der Ansprüche 3, 5, 6 oder 7, wobei das optische Element (11, 70, 81) eine plane Eintrittsoberfläche (11A) und eine plane Austrittsoberfläche (11B) aufweist,

wobei die Eintrittsoberfläche (11A) und die Austrittsoberfläche (11B) zueinander parallel und senkrecht zu einer durch die unter einem Winkel zueinander verlaufenden optischen Wege (8A, 8B, 8C) aufgespannten Auffächerungsebene angeordnet sind, und/oder
wobei die Eintrittsoberfläche (11A) und/oder die Austrittsoberfläche (11B) antireflexbeschichtet sind, und/oder
wobei das optische Element (11, 70, 81) ein Paar von entgegen gerichteten zueinander verschiebbaren Keilen (35A, 35B) umfasst, und wobei das Material des optischen Elements (11, 70, 81), mindestens einer der Keile (35A, 35B), Quarz, YAG, Saphir oder SF 10 ist.

**9.** Dispersionsanpassungseinheit (5) nach einem der Ansprüche 3, 5, 6, 7 oder 8, wobei eine Drehung des optische Elements (11, 70) und/oder ein Ändern einer Dicke und/oder des Brechungsindex und/oder des Beugungsparameters des optische Elements (81) eine Änderung der von der Dispersionsanpassungseinheit (5) erzeugten Dispersion bei gleichbleibender Lage des mindestens einen dispersiven Elements (7, 7A, 7B) bewirkt.

**10.** Dispersionsanpassungseinheit (5) nach einem der Ansprüche 3, 5, 6, 7, 8 oder 9, ferner mit

mindestens einem Fokussierelement zwischen den Wechselwirkungsbereichen des mindestens einen dispersiven Elements (7, 7A, 7B), wobei das optische Element (11, 70, 81) im Strahlengangabschnitt zwischen einem der Fokussierelemente und dem benachbarten Wechselwirkungsbereich des mindestens einen dispersiven Elements (7, 7A, 7B) angeordnet ist, und/oder
einem Reflexionselement (9, 9') zur in einer Richtung parallelversetzten Rückreflexion der optischen Wege (8A, 8B, 8C), das zwischen den Wechselwirkungsbereichen des mindestens einen dispersiven Elements (7, 7A, 7B) angeordnet ist, und oder
einem optischen Faltungselement (9) zur Rückführung des Strahlengangs durch die Wechselwirkungsbereiche des mindestens einen dispersiven Elements (7, 7A, 7B) und die optische Einheit, und/oder
einem zweiten Paar von Wechselwirkungsbereichen mit mindestens einem weiteren dispersiven Element und/oder

wobei das mindestens eine dispersive Element (7, 7A, 7B) ein oder mehrere optische Gitter, ein oder mehrere Prismen und/oder ein oder mehrere Grism umfasst.

11. Dispersionsanpassungseinheit (5) nach einem der Ansprüche 1, 2, 3, 5, 6, 7, 8, 9 oder 10, wobei die optische Einheit (11, 70, 81) mehrere im Strahlengang zwischen den Wechselwirkungsbereichen des mindestens einen dispersiven Elements (7, 7A, 7B) angeordnete optische Elemente umfasst und wobei die optischen Elemente in der gleichen Richtung oder in entgegengesetzte Richtungen verdreht im Strahlengang angeordnet sind.

12. Lasersystem (1, 1') mit

einer Laserpulsquelle (3) zum Erzeugen von spektral breiten Laserpulsen und mindestens einer Dispersionsanpassungseinheit (5) nach einem der vorhergehenden Ansprüche zur Pulskompression, zur Pulsstreckung und/oder zur Pulsoptimierung.

13. Lasersystem (1, 1') nach Anspruch 12, ferner mit einer Steuerungseinheit (13) zum Einstellen einer Einstellvorrichtung (17, 83) der mindestens einen Dispersionsanpassungseinheit (5).

14. Lasersystem (1, 1') nach Anspruch 13, ferner mit

einer Pulsdauermessvorrichtung (15) zum Ausgeben eines pulsdauerabhängigen Messsignals an die Steuerungseinheit (13) zum Einstellen der Einstellvorrichtung (17, 83) und/oder einer Pulsenergieparameter-Ausgabevorrichtung (15) zum Bereitstellen eines Selbstphasenmodulation-Dispersionsbeitrags an die Steuerungseinheit (13) zum Ansteuern der Einstellvorrichtung (17, 83), und/oder einer Verstärkereinheit wobei die Dispersionsanpassungseinheit (5) zur Pulsstreckung vor der Verstärkereinheit oder zur Pulskompression strahlabwärts der Verstärkereinheit angeordnet ist.

15. Verfahren zur Dispersionsanpassung für Laserpulse mit den Schritten

Bereitstellen (Schritt 61) eines Winkeldispersionsanteils durch spektrales Auffächern und Zusammenführen eines gepulsten Laserstrahls in einem Winkeldispersionsbereich (8), der durch zwei Wechselwirkungsbereiche des gepulsten Laserstrahls mit mindestens einen dispersiven Element (7, 7A, 7B) begrenzt wird, Bereitstellen (Schritt 63) eines optischen Elements (11, 70, 81), in dem Winkeldispersionsbereich (8) zwischen den zwei Wechselwirkungsbereichen der elektromagnetischen Strahlung mit dem mindestens einen dispersiven Element (7, 7A, 7B), wobei das optische Element (11, 70, 81) jeweils von einem Eintrittswinkel von spektralen Komponenten bezüglich einer Eintrittsoberfläche (11A) des optischen Elements (11, 70, 81) abhängige Ausbreitungsrichtungen im optischen Element (11, 70, 81) bereitstellt, und Verändern (Schritt 67) der Ausbreitungsrichtung und/oder der Ausbreitungslänge im optischen Element (11, 70, 81), wodurch Einfluss auf den Winkeldispersionsanteil, insbesondere unter Beibehalten der Ausbreitungsrichtungen spektraler Komponenten, genommen wird, wobei das Verändern (Schritt 67) der Ausbreitungsrichtung und/oder der Ausbreitungslänge einen eintrittswinkelabhängigen Parallelversatz der einzelnen Spektralkomponenten der elektromagnetischen Strahlung bezüglich der Ausbreitung der einzelnen Spektralkomponenten bewirkt.

16. Verfahren nach Anspruch 15, wobei das Verändern (Schritt 67) der Ausbreitungsrichtung und/oder der Ausbreitungslänge durch ein Drehen des optischen Elements (11) und/oder durch ein Ändern einer Dicke und/oder des Brechungsindex und/oder des Beugungsparameters des optischen Elements (70, 81) bewirkt wird.

17. Verfahren nach Anspruch 15 oder 16, ferner mit den Schritten

Messen (Schritt 65) einer Pulsdauer von Laserpulsen nach der Dispersionsanpassung und Einstellen der Ausbreitungsrichtung und/oder der Ausbreitungslänge im optischen Element (11), und/oder ferner mit den Schritten Bereitstellen eines Selbstphasenmodulation-Dispersionsbeitragparameters, und Verändern der Ausbreitungsrichtung und/oder der Ausbreitungslänge in Abhängigkeit des Selbstphasenmodulation-Dispersionsbeitragparameters.

**Claims**

1. A dispersion adjustment unit (5) for electromagnetic radiation with a spectral width, in particular for laser pulses, with

an arrangement with at least one dispersive element (7, 7A, 7B) for producing angular dispersion in an angular dispersion range (8) bounded by two interaction areas of the electromagnetic radiation with the at least one dispersive element (7, 7A, 7B), in which individual spectral components of the electromagnetic radiation are assigned optical paths (8A, 8B, 8C) running at an angle to one another, and an optical unit (4) arranged in the angular dispersion range (8) between the two interaction areas of the electromagnetic radiation with the at least one dispersive element (7, 7A, 7B) with a plane-parallel optical disc (11) that transmits electromagnetic radiation, with a plane entrance surface (11A) and a plane exit surface (11B) that are arranged parallel to one another, wherein the optical disc (11) causes a parallel offset, dependent on the angle of incidence, of the individual spectral components of the electromagnetic radiation with respect to the propagation of the individual spectral components in front of and after the optical disc (11).

2. The dispersion adjustment unit (5) according to claim 1, wherein the entrance surface (11A) and the exit surface (11B) are arranged perpendicular to a fanning-out plane spanned by the optical paths (8A, 8B, 8C) running at an angle to one another, and/or

wherein the entrance surface (11A) and/or the exit surface (11B) have an antireflection coating, and/or wherein the material of the plane-parallel disc (11, 43A, 43B, 45A, 45B) is quartz, YAG, sapphire or SF 10 and/or has a thickness of at least 0.1 mm or in the range of approximately 0.5 mm to approximately 10 mm.

3. A dispersion adjustment unit (5) for electromagnetic radiation with a spectral width, in particular for laser pulses, with

an arrangement with at least one dispersive element (7, 7A, 7B) for producing angular dispersion in an angular dispersion range (8) bounded by two interaction areas of the electromagnetic radiation with the at least one dispersive element (7, 7A, 7B), in which individual spectral components of the electromagnetic radiation are assigned optical paths (8A, 8B, 8C) running at an angle to one another, and an optical unit (4) arranged in the angular dispersion range (8) between the two interaction areas of the electromagnetic radiation with the at least one dispersive element (7, 7A, 7B) with

an optical element (11, 70, 81) that transmits the electromagnetic radiation and causes a parallel offset, dependent on the angle of incidence, of the individual spectral components of the electromagnetic radiation with respect to the propagation of the individual spectral components before and after the optical unit (11, 70, 81).

4. The dispersion adjustment unit (5) according to claim 3, wherein the optical unit (11, 70, 81) further has an adjusting device (17, 83) designed to change the parallel offset of the individual spectral components.

5. The dispersion adjustment unit (5) according to claim 3, wherein

- the optical element (11, 70, 81) has a plane entrance surface (11A) and a plane exit surface (11B) which are arranged parallel to one another, and/or the adjusting device for changing the spatial orientation of the optical element (11) in the angular dispersion range (8) is designed to change the parallel offset, or

the optical element (70) is designed as a multi-wedge arrangement, in particular as a double-wedge structure, and the adjusting device is designed to change a thickness and/or an angular position of the optical element (70) designed as a multi-wedge arrangement, for the purpose of changing the parallel offset, or the optical element (81) is designed as an electro-optical modulator and the adjusting device is designed to change a refractive index of the optical element (81) designed as an electro-optical modulator for changing the parallel offset, or the optical element is designed as a pair of acousto-optical modulators and the adjusting device is designed to change a diffraction parameter of the optical element designed as a pair of acousto-optical modulators in order to change the parallel offset.

6. The dispersion adjustment unit (5) according to any one of claims 3 or 5, wherein the optical element (11, 70, 81) has an entrance surface (11A) and an exit surface (11B) that are substantially parallel to one another and are arranged at a distance from each other, and/or wherein the optical element (11, 70, 81) can be adjusted independently of the at least one dispersive element (7, 7A, 7B) in its position and/or orientation in the beam path with respect to the at least one dispersive element (7, 7A, 7B).

7. The dispersion adjustment unit (5) according to any one of claims 3, 5 or 6, wherein the optical element (11, 70, 81) is mounted rotatably for adjusting the angular position of the optical element (11, 70, 81) with respect to the beam path, so that the angle of incidence and the angle of emergence of the optical paths (8A, 8B, 8C) with respect to an entrance surface (11A) and an exit surface (11B) of the optical element (11, 70, 81) can be adjusted.

8. The dispersion adjustment unit (5) according to any one of claims 3, 5, 6 or 7, wherein the optical element (11, 70, 81) has a plane entrance surface (11A) and a plane exit surface (11B),

wherein the entrance surface (11A) and the exit surface (11B) are arranged parallel to one another and perpendicular to a fanning-out plane spanned by the optical paths (8A, 8B, 8C) running at an angle to one another, and/or wherein the entrance surface (11A) and/or the exit surface (11B) have an antireflection coating, and/or wherein the optical element (11, 70, 81) comprises a pair of wedges (35A, 35B) arranged opposite to each other and slidable with respect to each other, and wherein the material of the optical element (11, 70, 81) of at least one of the wedges (35A, 35B) is quartz, YAG, sapphire or SF 10.

9. The dispersion adjustment unit (5) according to any one of claims 3, 5, 6, 7 or 8, wherein rotation of the optical element (11, 70) and/or changing of a thickness and/or of the refractive index and/or of the diffraction parameter of the optical element (81) causes a change in the dispersion produced by the dispersion adjustment unit (5) while the position of the at least one dispersive element (7, 7A, 7B) remains the same.

10. The dispersion adjustment unit (5) according to any one of claims 3, 5, 6, 7, 8 or 9, further with

at least one focusing element between the interaction areas of the at least one dispersive element (7, 7A, 7B), wherein the optical element (11, 70, 81) is arranged in the beam path section between one of the focusing elements and the adjoining interaction area of the at least one dispersive element (7, 7A, 7B), and/or a reflective element (9, 9') for the parallel-displaced back reflection of the optical paths (8A, 8B, 8C) in one direction, which is arranged between the interaction areas of the at least one dispersive element (7, 7A, 7B), and/or an optical convolution element (9) for returning the beam path through the interaction areas of the at least one dispersive element (7, 7A, 7B) and the optical unit, and/or a second pair of interaction areas with at least one further dispersive element and/or

wherein the at least one dispersive element (7, 7A, 7B) comprises one or a plurality of optical gratings, one or a plurality of prisms and/or one or a plurality of grisms.

11. The dispersion adjustment unit (5) according to any one of claims 1, 2, 3, 5, 6, 7, 8, 9 or 10, wherein the optical unit (11, 70, 81) comprises a plurality of optical elements arranged in the beam path between the interaction areas of the at least one dispersive element (7, 7A, 7B) and wherein the optical elements are arranged in the beam path twisted in the same or opposite directions.

12. A laser system (1, 1') with

a laser pulse source (3) for generating laser pulses in a broad spectrum and at least one dispersion adjustment unit (5) according to one of the preceding claims for pulse compression, pulse stretching and/or pulse optimization.

13. The laser system (1, 1') according to claim 12, further with a control unit (13) for adjusting an adjusting device (17, 83) of the at least one dispersion adjustment unit (5).

14. The laser system (1, 1') according to claim 13, further with

a pulse duration measuring device (15) for outputting a pulse duration-dependent measurement signal to the control unit (13) for adjusting the adjusting device (17, 83) and/or a pulse energy parameter output device (15) for providing a self-phase modulation dispersion value to the control unit (13) for controlling the adjusting device (17, 83), and/or an amplifier unit, wherein the dispersion adjustment unit (5) for pulse stretching is arranged upstream of the amplifier unit or for pulse compression downstream of the amplifier unit.

15. A method for adjusting the dispersion of laser pulses, with the steps of

providing (step 61) an angular dispersion component by spectral fanning out and combining of a pulsed laser beam in an angular dispersion range (8), which is delimited by two interaction areas of the pulsed laser beam with at least one dispersive element (7, 7A, 7B),
providing (step 63) an optical element (11, 70, 81) in the angular dispersion range (8) between the two interaction areas of the electromagnetic radiation with the at least one dispersive element (7, 7A, 7B), wherein the optical element (11, 70, 81) provides directions of propagation in the optical element (11, 70, 81) that are dependent on the angle of incidence of spectral components with respect to an entrance surface (11A) of the optical element (11, 70, 81), and changing (step 67) the direction and/or the length of propagation in the optical element (11, 70, 81), whereby influence is exerted on the angular dispersion component, in particular while maintaining the directions of propagation of spectral components, wherein the changing (step 67) of the direction of propagation and/or the length of propagation causes a parallel offset, dependent on angle of incidence, of the individual spectral components of the electromagnetic radiation with respect to the propagation of the individual spectral components.

16. The method according to claim 15, wherein the changing (step 67) of the direction of propagation and/or the length of propagation is caused by rotating the optical element (11) and/or by changing a thickness and/or the refractive index and/or the diffraction parameter of the optical element (70, 81).

17. The method according to claim 15 or 16, further with the steps of

measuring (step 65) the pulse duration of laser pulses after dispersion adjustment and
adjusting the direction of propagation and/or length of propagation in the optical element (11), and/or
further with the steps of
providing a self-phase modulation dispersion value parameter, and
changing the direction of propagation and/or length of propagation as a function of the self-phase modulation dispersion value parameter.

**Revendications**

1. Unité d'adaptation de dispersion (5) pour un rayonnement électromagnétique avec une largeur spectrale, en particulier pour des impulsions laser, avec

un agencement avec au moins un élément dispersif (7, 7A, 7B) pour la génération d'une dispersion angulaire dans une zone de dispersion angulaire (8) délimitée par deux zones d'interaction du rayonnement électromagnétique avec ledit au moins un élément dispersif (7, 7A, 7B), au sein duquel des composants spectraux individuels du rayonnement électromagnétique sont associés à des trajets optiques (8A, 8B, 8C) s'étendant selon un angle les uns par rapport aux autres, et
une unité optique (4) disposée dans la zone de dispersion angulaire (8) entre les deux zones d'interaction du rayonnement électromagnétique avec ledit au moins un élément dispersif (7, 7A, 7B), avec
une plaque optique (11) plano-parallèle transmettant le rayonnement électromagnétique, avec une surface d'incidence (11A) plane et une surface de sortie (11B) plane, disposées parallèlement l'une par rapport à l'autre, dans laquelle
la plaque optique (11) provoque un décalage parallèle dépendant de l'angle d'incidence des composants spectraux individuels du rayonnement électromagnétique relativement à la propagation des composants spectraux individuels avant et après la plaque optique (11).

2. Unité d'adaptation de dispersion (5) selon la revendication 1, dans laquelle la surface d'incidence (11A) et la surface de sortie (11B) sont disposées perpendiculairement à un plan de répartition défini par les trajets optiques (8A, 8B, 8C) s'étendant selon un angle les uns par rapport aux autres, et/ou

dans laquelle la surface d'incidence (11A) et/ou la surface de sortie (11B) sont revêtues d'un revêtement antireflet, et/ou
dans laquelle le matériau de la plaque plano-parallèle (11, 43A, 43B, 45A, 45B) est du quartz, du YAG, du saphir ou du SF 10, et/ou présente une épaisseur d'au moins 0,1 mm ou dans une plage d'environ 0,5 mm à environ 10 mm.

3. Unité d'adaptation de dispersion (5) pour un rayonnement électromagnétique avec une largeur spectrale, en particulier pour des impulsions laser, avec

un agencement avec au moins un élément dispersif (7, 7A, 7B) pour la génération d'une dispersion angulaire dans une zone de dispersion angulaire (8) délimitée par deux zones d'interaction du rayonnement électromagnétique avec ledit au moins un élément dispersif (7, 7A, 7B), au sein duquel des composants spectraux individuels du rayonnement électromagnétique sont associés à des trajets optiques (8A, 8B, 8C) s'étendant selon un angle les uns par rapport aux autres, et
une unité optique (4) disposée dans la zone de dispersion angulaire (8) entre les deux zones d'interaction du rayonnement électromagnétique avec ledit au moins un élément dispersif (7, 7A, 7B), avec

un élément optique (11, 70, 81) transmettant le rayonnement électromagnétique, qui provoque un décalage parallèle dépendant de l'angle d'incidence des composants spectraux individuels du rayonnement électromagnétique relativement à la propagation des composants spectraux individuels avant et après l'unité optique (11, 70, 81).

4. Unité d'adaptation de dispersion (5) selon la revendication 3, dans laquelle l'unité optique (11, 70, 81) présente en outre un dispositif de réglage (17, 83) conçu pour modifier le décalage parallèle des composants spectraux individuels.

5. Unité d'adaptation de dispersion (5) selon la revendication 3, dans laquelle

- l'élément optique (11, 70, 81) présente une surface d'incidence (11A) plane et une surface de sortie (11B) plane, disposées parallèlement l'une par rapport à l'autre, et/ou le dispositif de réglage est conçu pour ajuster l'orientation spatiale de l'élément optique (11) dans la zone de dispersion angulaire (8) afin de modifier le décalage parallèle, ou

l'élément optique (70) est conçu comme un agencement à plusieurs cales, en particulier une structure à double cale, et le dispositif de réglage est conçu pour ajuster une épaisseur et/ou une position angulaire de l'élément optique (70) conçu comme un agencement à plusieurs cales, afin de modifier le décalage parallèle, ou

l'élément optique (81) est conçu comme un modulateur électro-optique et le dispositif de réglage est conçu pour ajuster un indice de réfraction de l'élément optique (81) conçu comme un modulateur électro-optique, afin de modifier le décalage parallèle, ou

l'élément optique est conçu comme une paire de modulateurs acousto-optiques et le dispositif de réglage est conçu pour ajuster un paramètre de diffraction de l'élément optique conçu comme une paire de modulateurs acousto-optiques, afin de modifier le décalage parallèle.

6. Unité d'adaptation de dispersion (5) selon l'une des revendications 3 ou 5, dans laquelle l'élément optique (11, 70, 81) présente une surface d'incidence (11A) et une surface de sortie (11B) qui s'étendent sensiblement parallèlement l'une par rapport à l'autre et disposées à une distance l'une par rapport à l'autre, et/ou
dans laquelle l'élément optique (11, 70, 81) est réglable, indépendamment dudit au moins un élément dispersif (7, 7A, 7B), dans sa position et/ou son orientation dans le trajet du faisceau relativement à au moins un élément dispersif (7, 7A, 7B).

7. Unité d'adaptation de dispersion (5) selon l'une des revendications 3, 5 ou 6, dans laquelle l'élément optique (11, 70, 81) est monté de manière pivotante pour régler la position angulaire de l'élément optique (11, 70, 81) relativement au trajet du faisceau, de sorte que l'angle d'incidence et l'angle de sortie des trajets optiques (8A, 8B, 8C) relativement à une surface d'incidence (11A) et à une surface de sortie (11B) de l'élément optique (11, 70, 81) soient réglables.

8. Unité d'adaptation de dispersion (5) selon l'une des revendications 3, 5, 6 ou 7, dans laquelle l'élément optique (11, 70, 81) présente une surface d'incidence (11A) plane et une surface de sortie (11B) plane,

dans laquelle la surface d'incidence (11A) et la surface de sortie (11B) sont disposées parallèlement l'une par rapport à l'autre et perpendiculairement à un plan de répartition défini par les trajets optiques (8A, 8B, 8C) s'étendant selon un angle les uns par rapport aux autres, et/ou
dans laquelle la surface d'incidence (11A) et/ou la surface de sortie (11B) sont revêtues d'un revêtement antireflet, et/ou
dans laquelle l'élément optique (11, 70, 81) comprend une paire de cales (35A, 35B) mobiles l'une par rapport à l'autre et orientées en sens opposé, et dans laquelle le matériau de l'élément optique (11, 70, 81), d'au moins l'une des cales (35A, 35B), est du quartz, du YAG, du saphir ou du SF 10.

9. Unité d'adaptation de dispersion (5) selon l'une des revendications 3, 5, 6, 7 ou 8, dans laquelle une rotation de l'élément optique (11, 70) et/ou un ajustement d'une épaisseur et/ou de l'indice de réfraction et/ou du paramètre de diffraction de l'élément optique (81) provoque une modification de la dispersion générée par l'unité d'adaptation de dispersion (5) tout en conservant le même emplacement dudit au moins un élément dispersif (7, 7A, 7B).

10. Unité d'adaptation de dispersion (5) selon l'une des revendications 3, 5, 6, 7, 8 ou 9, en outre avec

au moins un élément de focalisation entre les zones d'interaction dudit au moins un élément dispersif (7, 7A, 7B), dans laquelle l'élément optique (11, 70, 81) est disposé dans le tronçon du trajet du faisceau entre l'un des éléments de focalisation et la zone d'interaction adjacente dudit au moins un élément dispersif (7, 7A, 7B), et/ou

un élément de réflexion (9, 9') pour la rétro-réflexion décalée parallèlement des trajets optiques (8A, 8B, 8C) dans une direction, disposé entre les zones d'interaction dudit au moins un élément dispersif (7, 7A, 7B), et ou

un élément de repli optique (9) pour renvoyer le trajet du faisceau à travers les zones d'interaction dudit au moins un élément dispersif (7, 7A, 7B) et l'unité optique, et/ou

une deuxième paire de zones d'interaction avec au moins un autre élément dispersif, et/ou

dans laquelle ledit au moins un élément dispersif (7, 7A, 7B) comprend un ou plusieurs réseaux optiques, un ou plusieurs prismes et/ou un ou plusieurs prismes-réseau.

11. Unité d'adaptation de dispersion (5) selon l'une des revendications 1, 2, 3, 5, 6, 7, 8, 9 ou 10, dans laquelle l'unité optique (11, 70, 81) comprend plusieurs éléments optiques disposés dans le trajet du faisceau entre les zones d'interaction dudit au moins un élément dispersif (7, 7A, 7B), et

dans laquelle les éléments optiques sont disposés dans le trajet du faisceau tournés soit dans la même direction, soit dans des directions opposées.

12. Système laser (1, 1') avec

une source d'impulsions laser (3) pour générer des impulsions laser à large spectre, et au moins une unité d'adaptation de dispersion (5) selon l'une des revendications précédentes pour la compression des impulsions, pour l'étirement des impulsions et/ou pour l'optimisation des impulsions.

13. Système laser (1, 1') selon la revendication 12, en outre avec
une unité de commande (13) pour régler un dispositif de réglage (17, 83) de ladite au moins une unité d'adaptation de dispersion (5).

14. Système laser (1, 1') selon la revendication 13, en outre avec

un dispositif de mesure de la durée d'impulsion (15) pour délivrer un signal de mesure dépendant de la durée d'impulsion à l'unité de commande (13) afin de régler le dispositif de réglage (17, 83) et/ou

un dispositif de sortie de paramètres d'énergie d'impulsion (15) pour fournir une contribution à la dispersion de modulation de phase auto-induite à l'unité de commande (13) pour piloter le dispositif de réglage (17, 83), et/ou

une unité d'amplification dans laquelle l'unité d'adaptation de dispersion (5) est disposée pour l'étirement des impulsions avant l'unité d'amplification ou pour la compression des impulsions en aval du faisceau de l'unité d'amplification.

15. Procédé d'adaptation de dispersion pour des impulsions laser avec les étapes de

fourniture (étape 61) d'une part de dispersion angulaire par répartition spectrale et recombinaison d'un faisceau laser pulsé dans une zone de dispersion angulaire (8), délimitée par deux zones d'interaction du faisceau laser pulsé avec au moins un élément dispersif (7, 7A, 7B), fourniture (étape 63) d'un élément optique (11, 70, 81) dans la zone de dispersion angulaire (8) entre les deux zones d'interaction du rayonnement électromagnétique avec ledit au moins un élément dispersif (7, 7A, 7B), dans lequel l'élément optique (11, 70, 81) fournit dans l'élément optique (11, 70, 81) des directions de propagation dépendant respectivement d'un angle d'incidence de composants spectraux relativement à une surface d'incidence (11A) de l'élément optique (11, 70, 81), et

modification (étape 67) de la direction de propagation et/ou de la longueur de propagation dans l'élément optique (11, 70, 81), ce qui permet d'exercer une influence sur la part de dispersion angulaire, en particulier tout en maintenant les directions de propagation des composants spectraux, dans lequel la modification (étape 67) de la direction de propagation et/ou de la longueur de propagation provoque un décalage parallèle dépendant de l'angle d'incidence des composants spectraux individuels du rayonnement électromagnétique relativement à la propagation des composants spectraux individuels.

16. Procédé selon la revendication 15, dans lequel la modification (étape 67) de la direction de propagation et/ou de la longueur de propagation est provoquée par une rotation de l'élément optique (11) et/ou par un ajustement d'une épaisseur et/ou de l'indice de réfraction et/ou du paramètre de diffraction de l'élément optique (70, 81).

17. Procédé selon la revendication 15 ou 16, en outre avec les étapes de

mesure (étape 65) d'une durée d'impulsion des impulsions laser après l'adaptation de dispersion et

réglage de la direction de propagation et/ou de la longueur de propagation dans l'élément optique (11), et/ou

en outre avec les étapes de

fourniture d'un paramètre de contribution à la dispersion de modulation de phase auto-induite, et

modification de la direction de propagation et/ou de la longueur de propagation en fonction du paramètre de contribution à la dispersion de modulation de phase auto-induite.

FIG 1

$\lambda < \lambda_0$
$\lambda = \lambda_0$
$\lambda > \lambda_0$

**FIG 2A**

**FIG 2B**

## FIG 3A

## FIG 3B

## FIG 3C

## FIG 3D

FIG 4A

FIG 4B

# FIG 5A

# FIG 5B

# FIG 5C

# FIG 5D

FIG 6

FIG 7

9'

7B'

11'

51B

50

51

51A

6

7A'

## FIG 8A

35

39

11A

35A

41A

11B

35B

37

## FIG 8B

43A          43B

41B          41B'

## FIG 8C

45A          45B

47A          47B

## FIG 9

61

63

65

67

## FIG 10

## FIG 11

$\cdots\cdots\cdots \quad \lambda < \lambda_0$

$----- \quad \lambda = \lambda_0$

$-\cdot-\cdot- \quad \lambda > \lambda_0$

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015117128 A1
- US 7822347 B1
- US 7729045 B2
- US 8780440 B2
- DE 102010018967 A1
- US 20080304127 A1
- US 6272156 B1
- US 20110255563 A1
- US 20060159137 A1
- WO 2010028837 A1
- WO 2015140512 A1
- CN 104795718 A